# EUROPEAN PATENT SPECIFICATION

(11) **EP 4 523 457 B1**
(45) Date of publication and mention of the grant of the patent: **04.03.2026**
(21) Application number: 23714854.9
(22) Date of filing: 15.03.2023
(51) Int. Cl.: H04W 40/02, H04L 45/24, H04W 40/12, H04W 40/18

(54) **COMMUNICATION DEVICE AND METHOD FOR SWITCHING RADIO SCHEMES BASED ON USER PREFERENCE**
KOMMUNIKATIONSVORRICHTUNG UND VERFAHREN ZUM UMSCHALTEN VON FUNKSCHEMEN AUF BASIS VON BENUTZERPRÄFERENZEN
DISPOSITIF DE COMMUNICATION ET PROCÉDÉ DE COMMUTATION DE SCHÉMAS RADIO SUR LA BASE D'UNE PRÉFÉRENCE D'UTILISATEUR

(30) Priority: 09.05.2022 JP 2022077142
(43) Date of publication of application: 19.03.2025
(73) Proprietor: Sony Group Corporation, Tokyo 108-0075 (JP)
(72) Inventor: UEURA, Daichi, Tokyo 108-0075 (JP); HORITA, Koki, Tokyo 108-0075 (JP); CARETTE, Thomas, 1935 Zaventem (BE); JIMBO, Masanobu, Tokyo 108-0075 (JP); YANG, Bin, Tokyo 108-0075 (JP); OSAKI, Seichiroh, Tokyo 108-0075 (JP); GOTO, Jungo, Tokyo 108-0075 (JP)
(74) Representative: 2SPL Patentanwälte PartG mbB
(86) International application number: PCT/JP2023/010039
(87) International publication number: WO 2023/218753

(56) References cited:
- CN-A- 110 779 175
- US-A1- 2017 302 988
- US-A1- 2020 351 172
- US-A1- 2021 232 979
- US-B1- 10 649 725
- US-B1- 7 275 103
- US-B2- 11 201 904
- WANG PEI ET AL: "Indoor Path Loss Modeling for 5G Communications in Smart Factory Scenarios Based on Meta-Learning", 2021 TWELFTH INTERNATIONAL CONFERENCE ON UBIQUITOUS AND FUTURE NETWORKS (ICUFN), IEEE, 17 August 2021 (2021-08-17), pages 438 - 443, XP033971426, DOI: 10.1109/ICUFN49451.2021.9528530

## Description

### [Technical Field]

The present disclosure relates to a communication device, an information processing device, a communication method, and an information processing method.

### [Background Art]

In many cases, a communication device such as a smartphone can be connected to a plurality of communication paths (for example, Wi-Fi and cellular network). The communication device appropriately switches the currently connected communication path (for example, wireless local area network (LAN) such as Wi-Fi) to another communication path (for example, cellular network) in accordance with the states of the communication paths. For example, in the related art, the communication device estimates the quality of a communication path from a change in radio environment or the status of communication and performs communication path switching based on the result.

US10649725 presents a system for integrating multi-channel inputs to determine user preferences. Further prior art is known from patents and patent applications US7275103, US11201904, US2017/302988, US2021/232979, US2020/351172, and CN110779175.

### [Citation List]

### [Non Patent Literature]

[NPL 1]
"Intelligent Wi-Fi", (online), Samsung, (retrieved on May 1, 2022), Internet<URL:https://docs.samsungknox.com/admin/knox-platform-for-enterprise/kbas/kba-360034073174.htm>

### [Summary of Invention]

### [Technical Problem]

However, even if the communication device determines that communication path switching is necessary, a user may want to keep using the currently connected communication path as it is. For example, even if the communication quality of a wireless LAN declines and the communication device determines that switching to a cellular network is necessary, a user may want to keep using the wireless LAN because of, for example, price issues. In this case, the user becomes uncomfortable with communication path switching automatically performed by the communication device.

In this regard, the present disclosure proposes a communication device, an information processing device, a communication method, and an information processing method capable of realizing highly convenient communication path switching. It should be noted that the above problem or object is merely one of the problems or objects that can be solved or achieved by the plurality of embodiments disclosed herein.

### [Solution to Problem]

The invention made is captured in the attached set of independent claims. Optional features are claimed in the set of dependent claims.

### [Brief Description of Drawings]

[Fig. 1]

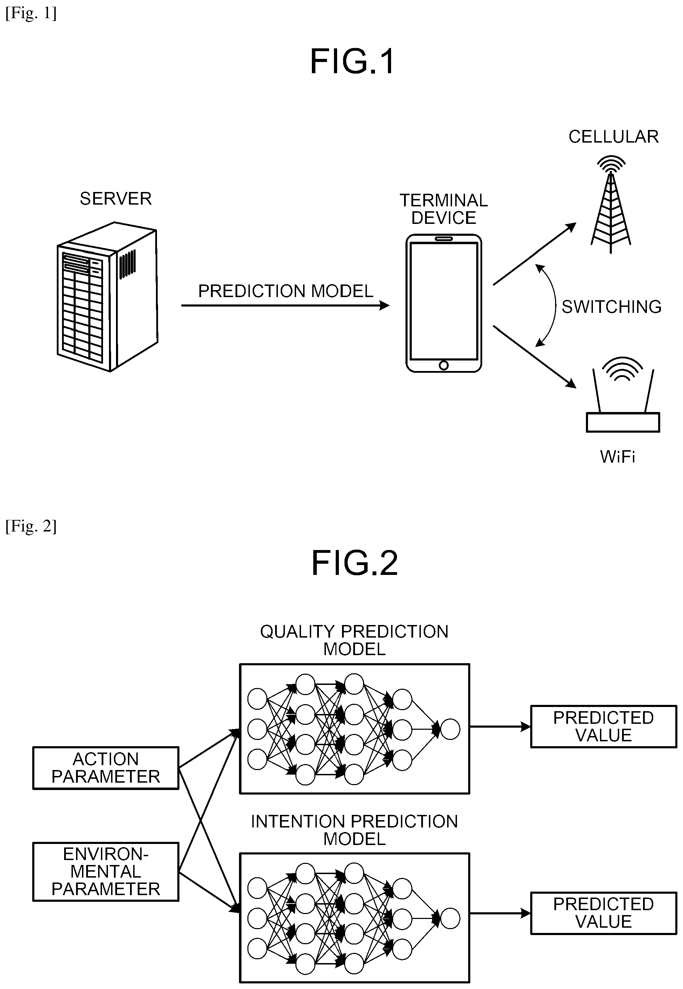

   Fig. 1 is a diagram illustrating an overview of the present embodiment.
[Fig. 2]
   Fig. 2 is a diagram for describing a prediction model.
[Fig. 3]

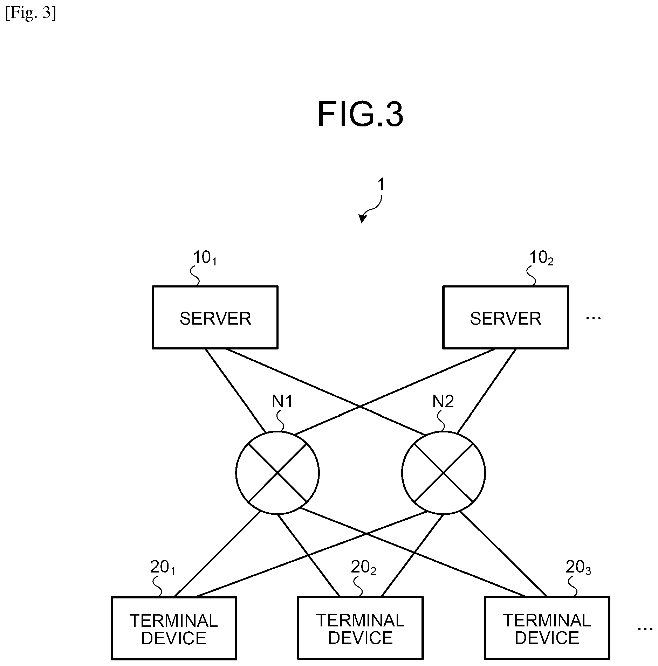

   Fig. 3 is a diagram illustrating a configuration example of a communication system according to the embodiment of the present disclosure.
[Fig. 4]

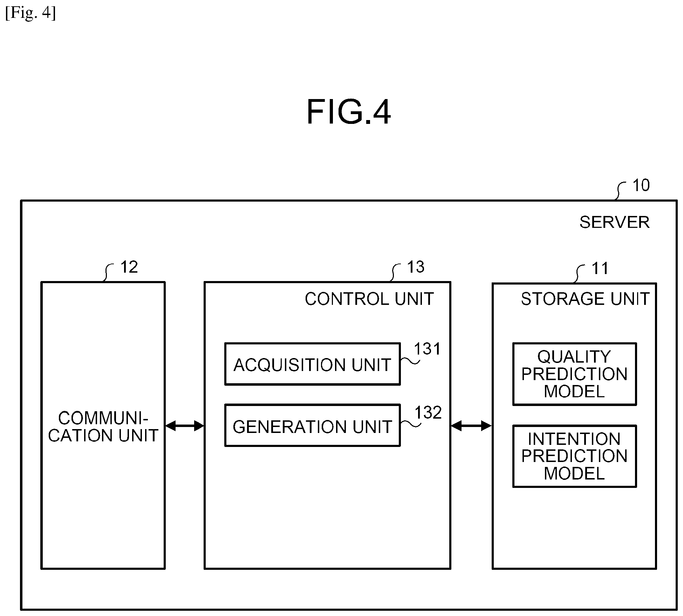

   Fig. 4 is a diagram illustrating a configuration example of a server according to the embodiment of the present disclosure.
[Fig. 5]

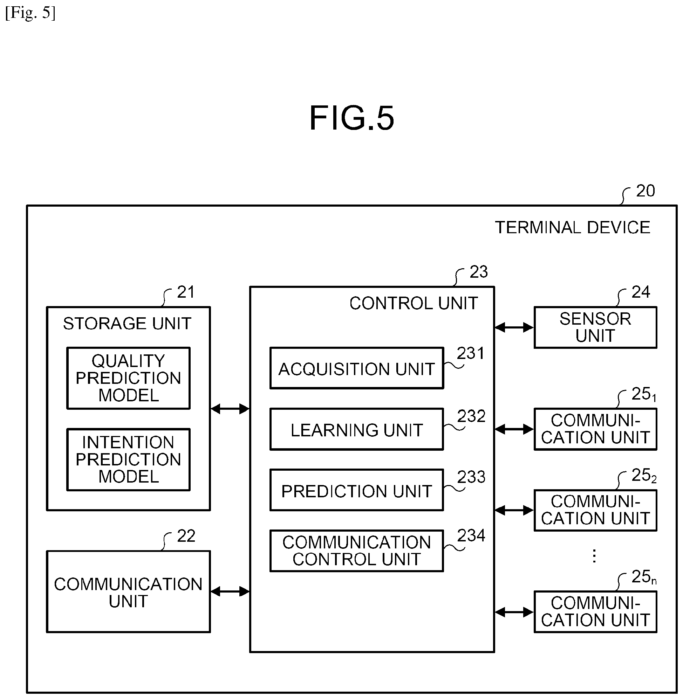

   Fig. 5 is a diagram illustrating a configuration example of a terminal device according to the embodiment of the present disclosure.
[Fig. 6]

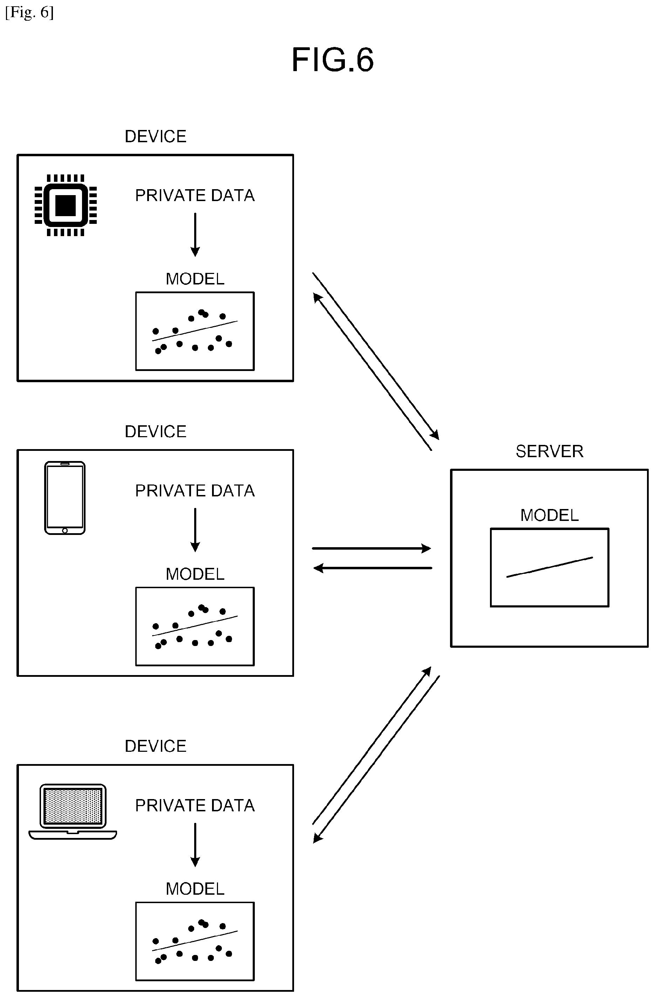

   Fig. 6 is a diagram illustrating federated learning.
[Fig. 7]

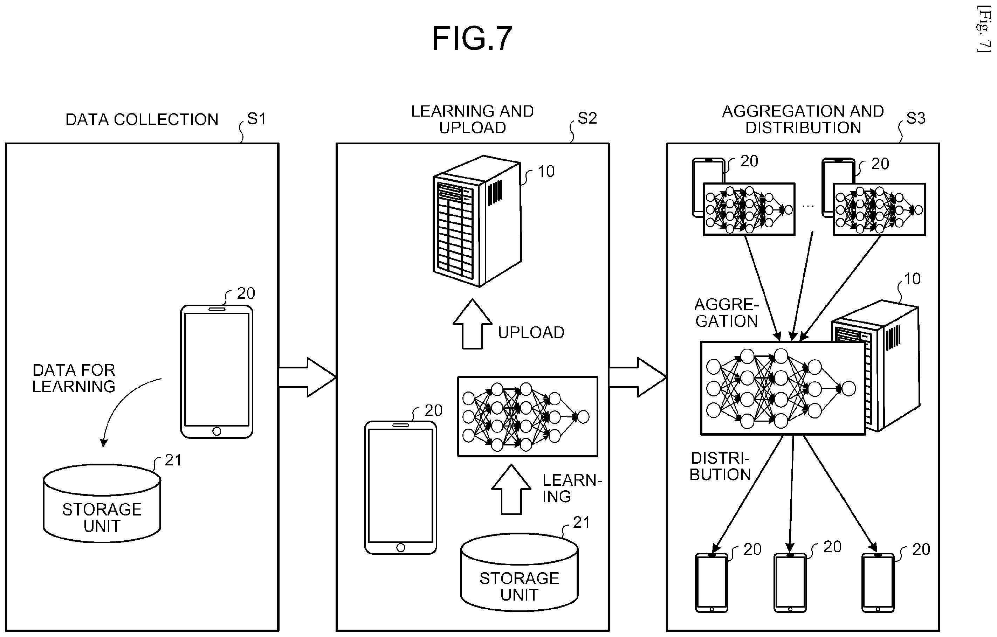

   Fig. 7 is a diagram illustrating an example of federated learning application to prediction according to the present embodiment.
[Fig. 8]

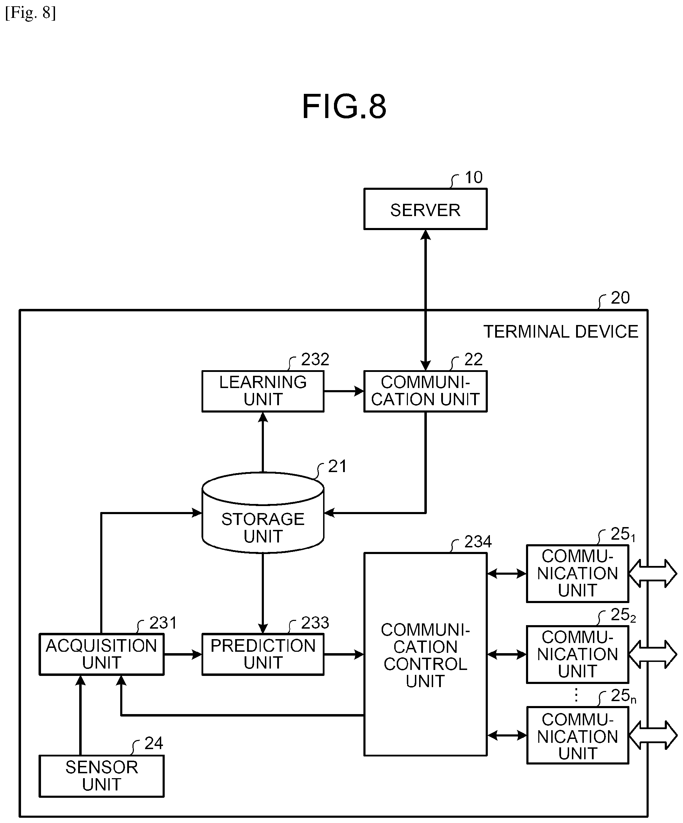

   Fig. 8 is a diagram illustrating a functional configuration of a communication system 1.
[Fig. 9]

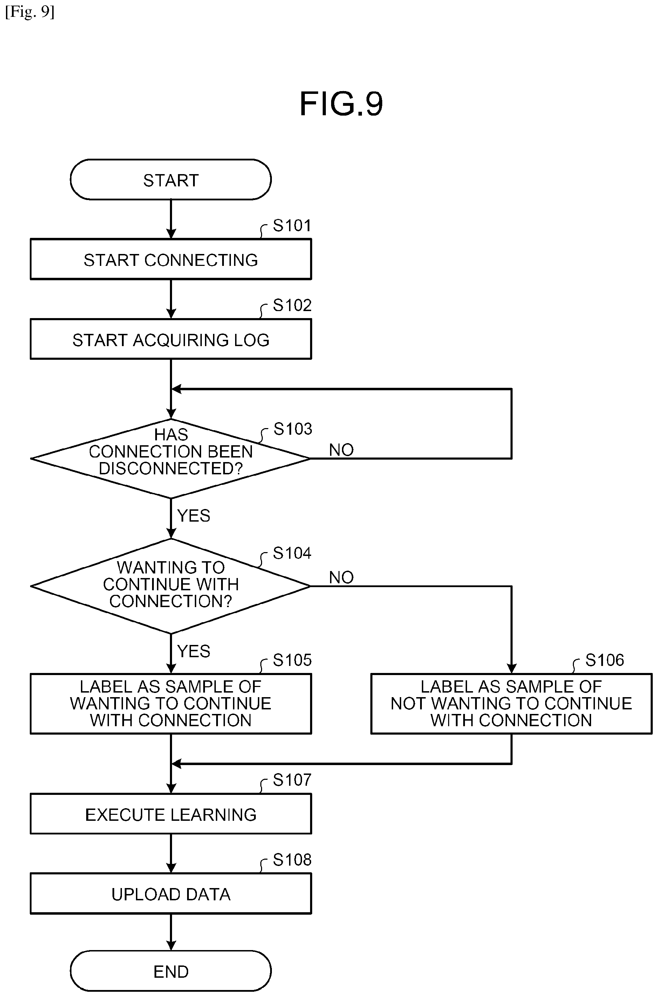

   Fig. 9 is a flowchart illustrating learning processing.
[Fig. 10]

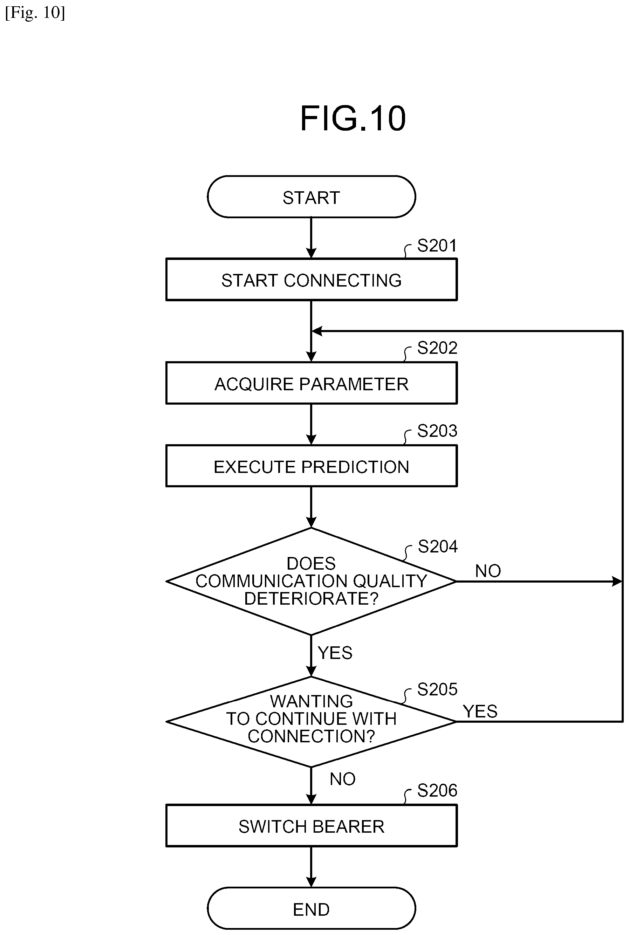

   Fig. 10 is a flowchart illustrating bearer switching processing.
[Fig. 11]

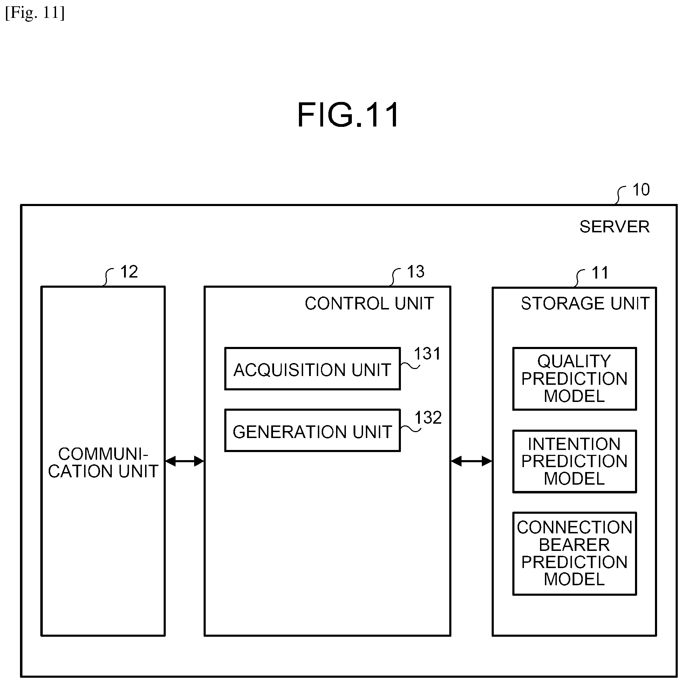

   Fig. 11 is a diagram illustrating a configuration example of a server according to a second embodiment.
[Fig. 12]

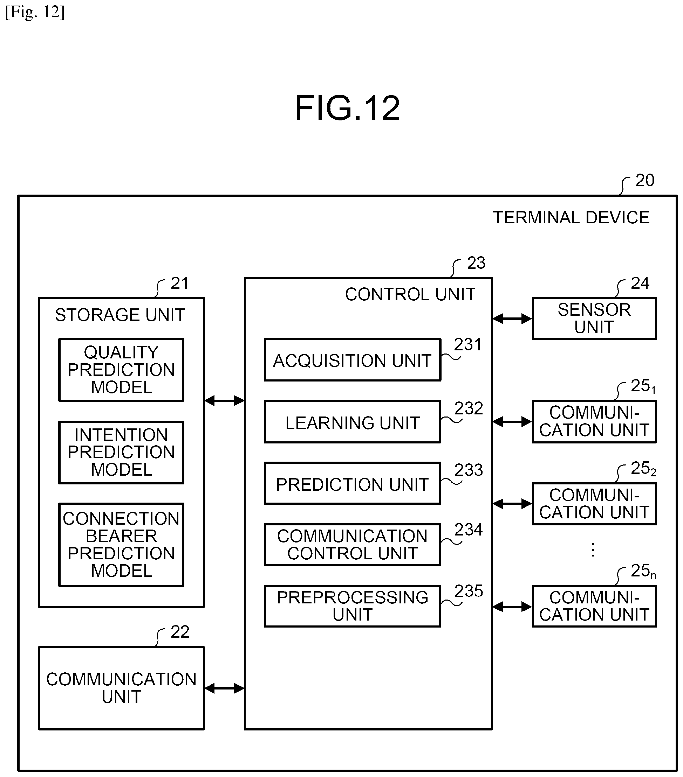

   Fig. 12 is a diagram illustrating a configuration example of a terminal device according to the second embodiment.
[Fig. 13]

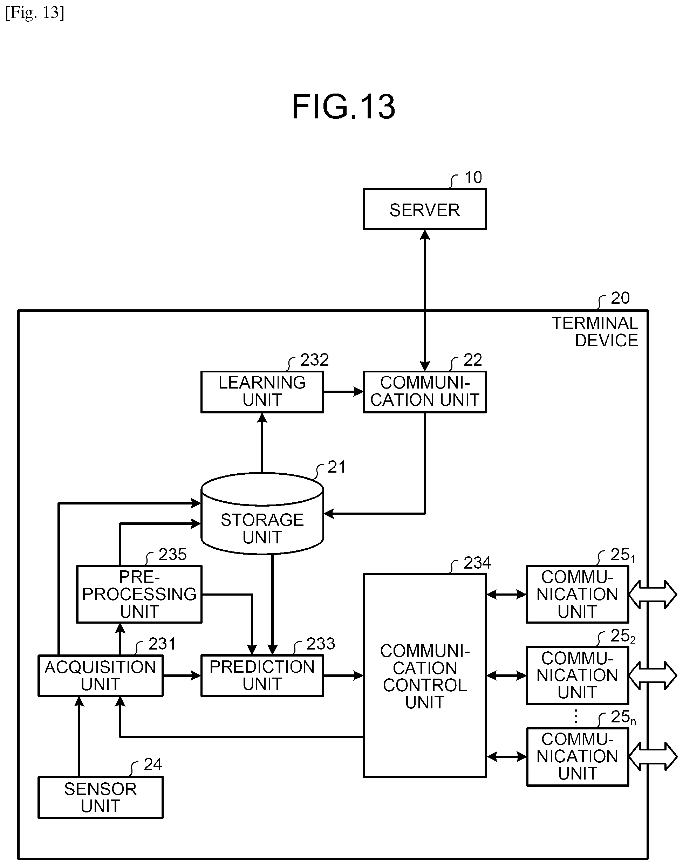

   Fig. 13 is a diagram illustrating a functional configuration of a communication system 1 according to the second embodiment.
[Fig. 14]

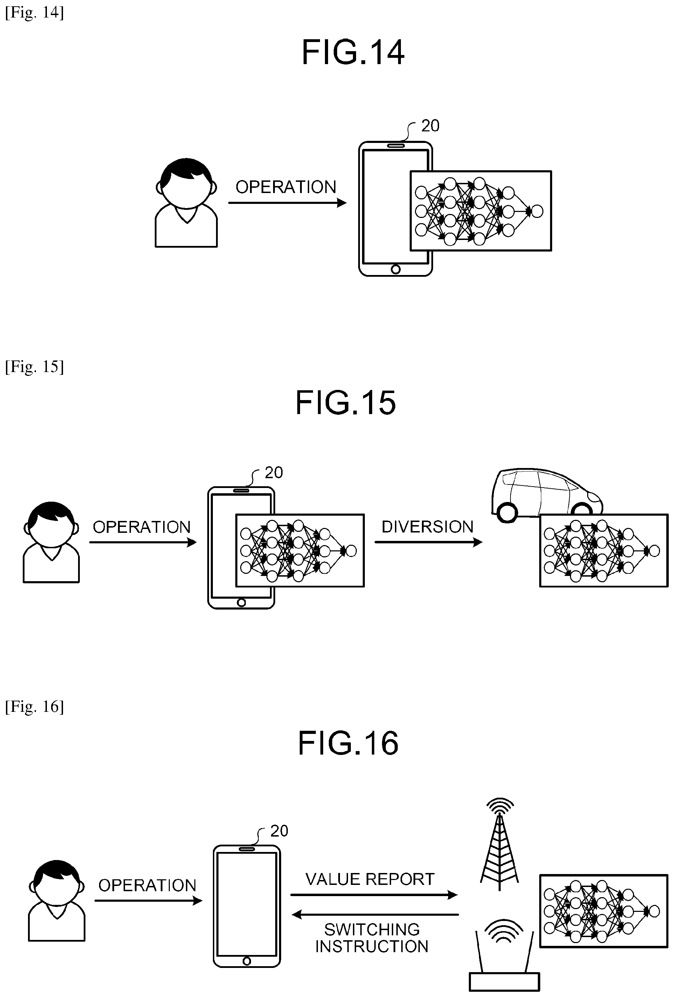

   Fig. 14 is a diagram illustrating an example of prediction model application.
[Fig. 15]
   Fig. 15 is a diagram illustrating another example of prediction model application.
[Fig. 16]
   Fig. 16 is a diagram illustrating another example of prediction model application.

### [Description of Embodiments]

Hereinafter, embodiments of the present disclosure will be described in detail based on the drawings. It should be noted that in the following embodiments, redundant description is omitted by using the same codes for the same parts. The invention made is disclosed in the embodiments referring to figure 5.

In addition, in the present specification and drawings, a plurality of components substantially identical in functional configuration may be distinguished by different numbers following the same code. For example, as necessary, a plurality of configurations substantially identical in functional configuration are distinguished as in the case of terminal devices 201 and 202. However, only the same code is used in a case where it is not necessary to particularly distinguish each of a plurality of components substantially identical in functional configuration. For example, the simple form of terminal device 20 is used in a case where it is not necessary to distinguish between the terminal device 201 and 202.

Each of the one or more embodiments described below (including examples and modification examples) can be implemented independently. Meanwhile, as appropriate, at least a part of each of the plurality of embodiments described below may be implemented in combination with at least a part of another embodiment. Mutually different novel features can be included in the plurality of embodiments. Therefore, the plurality of embodiments are capable of contributing to solving mutually different objects or tasks and having different effects.

### <<1. Overview>>

In many cases, a terminal device such as a smartphone can be connected to a plurality of communication paths. In the related art, a terminal device performs communication path switching as appropriate in accordance with the states of communication paths. For example, in the related art, the terminal device estimates the quality of a communication path from a change in radio environment or the status of communication and performs communication path switching based on the result.

However, even if the terminal device determines that communication path switching is necessary, a user may want to keep using the currently connected communication path as it is. For example, even if the communication quality of a wireless LAN (hereinafter, also referred to as Wi-Fi) declines and the terminal device determines that switching to a cellular network is necessary, a user may want to keep using the Wi-Fi because of, for example, price issues. In this case, the user becomes uncomfortable with communication path switching automatically performed by the terminal device. Another problem is that it is difficult for the user to understand why communication path switching has occurred.

Therefore, in the present embodiment, the above problems are solved as follows.

Fig. 1 is a diagram illustrating an overview of the present embodiment. In many cases, the terminal device such as a smartphone can be connected to a plurality of communication paths (hereinafter, also referred to as bearers). In the example of Fig. 1, the terminal device can be connected to the two bearers of a wireless LAN network such as Wi-Fi (registered trademark) and a cellular network.

In the present embodiment, the terminal device first predicts the communication quality of the currently used bearer. For example, assuming that the currently used bearer is the Wi-Fi, the terminal device predicts the radio quality of the Wi-Fi. Then, in a case where the communication quality of the currently used bearer has declined (for example, in a case where the radio quality of the Wi-Fi has met predetermined criteria), the terminal device predicts the user's connection intention (whether or not the user wants to keep using the currently used bearer).

A machine learning-based method is conceivable as a communication quality and connection intention prediction method. In the present embodiment, the terminal device performs the predictions using a prediction model distributed from a server. Fig. 2 is a diagram illustrating the prediction model. In the present embodiment, a quality prediction model for communication quality prediction and an intention prediction model for predicting a user's connection intention are used as the prediction model.

The quality prediction model is a learned model trained using at least one of an action parameter related to radio communication of a user and an environmental parameter related to the radio communication related to the action parameter as input data and communication quality-related information as a correct answer label (teaching data). When the terminal device inputs a parameter to the quality prediction model, the quality prediction model outputs the future communication quality of the corresponding bearer (for example, 0 (good) to 1 (bad)).

The intention prediction model is a learned model trained using at least one of an action parameter related to radio communication of a user and an environmental parameter related to the radio communication related to the action parameter as input data and a value indicating whether a user wants to keep using the current bearer as a correct answer label (teaching data). It should be noted that the terminal device may acquire the correct answer label value by directly asking the user via a dialog or based on the user's behavior with respect to the bearer (for example, behavior such as manually turning off the Wi-Fi). When the terminal device inputs a parameter to the intention prediction model, the intention prediction model outputs how much the user wants to use the corresponding bearer (for example, 0 (wanting to use) to 1 (not wanting to use)).

The terminal device predicts the user's connection intention at constant time intervals after the quality of the currently used bearer (for example, Wi-Fi) meets predetermined conditions. Then, in a case where the terminal device determines that the user does not want to keep using the current bearer, the terminal device switches the currently used bearer (for example, Wi-Fi) to another bearer (for example, cellular network).

In this manner, in the present embodiment. the terminal device in the case of a decline in the communication quality of the current bearer predicts the user's connection intention (for example, how much the user wants to use the current bearer) before switching instead of simply switching the current bearer to another bearer. Then, in a case where the terminal device predicts that the user does not want to keep using the current bearer (that is, the current bearer may be switched to another bearer), the terminal device switches the current bearer to another bearer. As a result, the terminal device is capable of reducing switching unintended by the user and thus is capable of user experience (UX) improvement.

The overview of the present embodiment has been described above and, hereinafter, a communication system 1 according to the present embodiment will be described in detail.

### <<2. First Embodiment>>

### <2-1. Configuration of Communication System>

First, the configuration of the communication system 1 will be described.

Fig. 3 is a diagram illustrating a configuration example of the communication system 1 according to the embodiment of the present disclosure. The communication system 1 includes a server 10 and the terminal device 20 configured to be connectable to a plurality of communication paths (hereinafter, also referred to as bearers). The communication system 1 may include a plurality of the servers 10 and a plurality of the terminal devices 20. In the example of Fig. 3, the communication system 1 includes, for example, servers 101 and 102 as the server 10 and includes, for example, terminal devices 201, 202 and 203 as the terminal device 20. The terminal device 20 connects to the server 10 via an upstream network.

Here, the upstream network is a higher network as viewed from the terminal device 20. In the example of Fig. 3, the upstream networks are networks N1 and N2. The networks N1 and N2 are communication networks such as local area networks (LANs), wide area networks (WANs), cellular networks, fixed telephone networks, local Internet protocol (IP) networks, and the Internet. The networks N1 and N2 may include a wired network or a wireless network. In addition, the networks N1 and N2 may include a core network. The core network is, for example, an Evolved Packet Core (EPC) or 5G Core (5GC) network. As a matter of course, the network N may also be a data network connected to the core network. The data network may be a carrier's service network such as an IP multimedia subsystem (IMS) network. In addition, the data network may also be a private network such as an internal network of an enterprise.

It should be noted that although only two upstream networks are illustrated in the example of Fig. 3, the number of upstream networks is not limited to two. For example, if the upstream network is a cellular network configured by a wireless access network and a core network, a plurality of core networks may be present as the upstream networks. At this time, different data networks may be present for each core network.

The terminal device 20 of the present embodiment can be connected to the upstream network using the plurality of communication paths. At this time, at least one of the plurality of communication paths may be a radio communication path. For example, the communication path may be a radio communication path (wireless access network) between the terminal device 20 and a base station. In addition, the communication path may be a radio communication path between the terminal device 20 and an access point. As a matter of course, the plurality of communication paths may include a wired communication path (for example, wired LAN). It should be noted that the communication path may be the upstream network itself.

In a case where a radio communication path is included in the plurality of communication paths, the terminal device 20 is configured to connect to the upstream network using a radio access technology (RAT) such as Long Term Evolution (LTE), New Radio (NR), Wi-Fi, and Bluetooth (registered trademark). At this time, the terminal device 20 may be configured to be capable of using different radio access technologies (radio communication schemes). For example, the terminal device 20 may be configured to be capable of using NR and Wi-Fi. In addition, the terminal device 20 may be configured to be capable of using different cellular communication technologies (for example, LTE and NR). LTE and NR are types of cellular communication technology and enable mobile communication of a terminal device by arranging a plurality of areas covered by a base station in the form of cells.

It should be noted that in the following description, "LTE" includes LTE-Advanced (LTE-A), LTE-Advanced Pro (LTE-A Pro), and Evolved Universal Terrestrial Radio Access (EUTRA). In addition, NR includes New Radio Access Technology (NRAT) and Further EUTRA (FEUTRA). It should be noted that a single base station may manage a plurality of cells. In the following description, cells responding to LTE are referred to as LTE cells, and cells responding to NR are referred to as NR cells.

NR is a radio access technology of the generation (fifth generation) subsequent to LTE (fourth-generation communication including LTE-Advanced and LTE-Advanced Pro). NR is a radio access technology capable of responding to various use cases including Enhanced Mobile Broadband (eMBB), Massive Machine Type Communications (mMTC), and Ultra-Reliable and Low Latency Communications (URLLC). NR is being considered as a technical framework that responds to usage scenarios, requirements, arrangement scenarios, and so on in these use cases.

It should be noted that the terminal device 20 may be connectable to the upstream network using a radio access technology (radio communication scheme) other than LTE, NR, Wi-Fi, and Bluetooth. For example, the terminal device 20 may be connectable to the upstream network using Low Power Wide Area (LPWA) communication. In addition, the terminal device 20 may be connectable to the upstream network using proprietary radio communication.

Here, LPWA communication is radio communication that enables low-power wide-range communication. For example, LPWA radio refers to Internet of Things (IoT) radio communication using a specific low-power radio (for example, 920 MHz band) or industry-science-medical (ISM) band. It should be noted that the LPWA communication used by the terminal device 20 may comply with the LPWA standards. Examples of the LPWA standards include ELTRES, ZETA, SIGFOX, LoRaWAN, and NB-Iot. As a matter of course, the LPWA standards may be other LPWA standards not limited thereto.

It should be noted that the plurality of communication paths may include a virtual network. For example, the plurality of communication paths to which the terminal device 20 can be connected may include a virtual network such as a virtual local area network (VLAN) and a physical network such as an IP communication path. In this case, the terminal device 20 may perform path control based on a path control protocol such as Open Shortest Path First (OSPF) and Border Gateway Protocol (BGP).

In addition, the plurality of communication paths may include a plurality of one or more overlay networks or may include one or more network slicings.

It should be noted that the devices in the drawing may be regarded as devices in a logical sense. In other words, some or all of the devices in the same drawing may be realized by a virtual machine (VM), a container, a docker, or the like, and those may be physically implemented on the same hardware.

In addition, in the present embodiment, a communication device is a device having a communication function and, in the example of Fig. 3, at least the terminal device 20 is a communication device. The server 10 may be regarded as a communication device.

Hereinafter, the configuration of each device configuring the communication system 1 will be specifically described. It should be noted that the configuration of each device described below is merely an example. The configuration of each device may differ from the configuration described below.

### <2-1-1. Configuration of Server>

The configuration of the server 10 will be described first.

The server 10 is an information processing device (computer) that provides various services to the terminal device 20 via the upstream network (for example, the networks N1 and N2). For example, the server 10 is an application server or a web server. The server 10 may be a PC server, a midrange server, or a mainframe server. In addition, the server 10 may be an information processing device that performs data processing (edge processing) near a user or a terminal. For example, the server 10 may be an information processing device (computer) attached to or built in a base station. As a matter of course, the server 10 may be an information processing device that performs cloud computing.

Fig. 4 is a diagram illustrating a configuration example of the server 10 according to the embodiment of the present disclosure. The server 10 includes a storage unit 11, a communication unit 12, and a control unit 13. It should be noted that the configuration illustrated in Fig. 4 is a functional configuration, and the hardware configuration may differ from the configuration illustrated in Fig. 4. In addition, the functions of the server 10 may be distributed and implemented in a plurality of physically separated configurations. For example, the server 10 may be configured by a plurality of information processing devices.

The storage unit 11 is a data readable-writable storage device such as a dynamic random access memory (DRAM), a static random access memory (SRAM), a flash memory, and a hard disk. The storage unit 11 functions as storage means of the server 10. The storage unit 11 stores prediction models (learned models) to be distributed to the terminal device 20 such as quality prediction model and intention prediction model. The information will be described later.

The communication unit 12 is a communication interface for communicating with another device. For example, the communication unit 12 is a network interface. For example, the communication unit 12 is a local area network (LAN) interface such as a network interface card (NIC). It should be noted that the communication unit 12 may be a wired interface or a wireless interface. The communication unit 12 functions as communication means of the server 10. The communication unit 12 communicates with the terminal device 20 and a terminal device 30 under the control of the control unit 13.

The control unit 13 is a controller that controls each unit of the server 10. The control unit 13 is realized by a processor such as a central processing unit (CPU) and a micro processing unit (MPU). For example, the control unit 13 is realized by the processor executing various programs stored in the storage device in the server 10 using a random access memory (RAM) or the like as a work area. It should be noted that the control unit 13 may be realized by an integrated circuit such as an application specific integrated circuit (ASIC) and a field programmable gate array (FPGA). Each of the CPU, MPU, ASIC, and FPGA can be regarded as a controller.

The control unit 13 includes an acquisition unit 131 and a generation unit 132. The blocks that configure the control unit 13 (acquisition unit 131 to generation unit 132) are functional blocks indicating the functions of the control unit 13. These functional blocks may be software blocks or hardware blocks. For example, each of the functional blocks described above may be one software module realized by software (including a micro program) or may be one circuit block on a semiconductor chip (die). As a matter of course, each functional block may be one processor or one integrated circuit. The control unit 13 may be configured by functional units different from the functional blocks described above. Any method can be used in configuring the functional blocks.

### <2-1-2. Configuration of Terminal Device>

Next, the configuration of the terminal device 20 will be described.

The terminal device 20 is a communication device that communicates with another communication device such as a base station and an access point. The terminal device 20 is configured to be connectable to the plurality of communication paths (bearers). For example, the terminal device 20 can be connected to the two bearers of Wi-Fi (registered trademark) and cellular network.

Any form of computer can be employed as the terminal device 20. For example, the terminal device 20 may be a mobile terminal such as a mobile phone, a smart device (smartphone or tablet), a personal digital assistant (PDA), and a laptop PC. In addition, the terminal device 20 may be a wearable device such as a smart watch. In addition, the terminal device 20 may be an xR device such as an augmented reality (AR) device, a virtual reality (VR) device, and a mixed reality (MR) device. In addition, the terminal device 20 may be an imaging device (for example, a camcorder) that has a communication function or may be, for example, a motorcycle or a mobile relay vehicle equipped with communication equipment such as a field pickup unit (FPU). In addition, the terminal device 20 may be a Machine to Machine (M2M) device or an Internet of Things (IoT) device. The terminal device 20 may be a router that has a plurality of communication paths.

In addition, the terminal device 20 may be capable of LPWA communication with another communication device (for example, a base station, an access point, and another terminal device 20). In addition, the radio communication that is used by the terminal device 20 may be radio communication using millimeter waves. It should be noted that the radio communication used by the terminal device 20 may be radio communication using radio waves or radio communication using infrared rays or visible light (optical radio).

In addition, the terminal device 20 may be a moving body device. The moving body device is a movable radio communication device. At this time, the terminal device 20 may be a radio communication device installed at the moving body or may be the moving body itself. For example, the terminal device 20 may be a vehicle that moves on a road, such as an automobile, bus, truck, and motorcycle, or a radio communication device mounted at the vehicle. It should be noted that the moving body may be a mobile terminal or a moving body that moves on or under the ground or water. In addition, the moving body may be a moving body that moves in the atmosphere, such as a drone and a helicopter, or a moving body that moves outside the atmosphere, such as an artificial satellite.

The terminal device 20 may be connected to and communicate with a plurality of base stations or a plurality of cells at the same time. For example, in a case where one base station supports a communication area via a plurality of cells (for example, pCell, sCell), it is possible to bundle the plurality of cells and communicate between the base station and the terminal device 20 by carrier aggregation (CA) technology, dual connectivity (DC) technology, or multi-connectivity (MC) technology. Alternatively, via cells of different base stations and by coordinated multi-point transmission and reception (CoMP) technology, the terminal device 20 is capable of communicating with the plurality of base stations.

Fig. 5 is a diagram illustrating a configuration example of the terminal device 20 according to the embodiment of the present disclosure. The terminal device 20 includes a storage unit 21, a communication unit 22, a control unit 23, a sensor unit 24, and a plurality of communication units 25 (communication units 251 to 25n: n is any integer). It should be noted that the configuration illustrated in Fig. 5 is a functional configuration, and the hardware configuration may differ from the configuration illustrated in Fig. 5. In addition, the functions of the terminal device 20 may be distributed and implemented in a plurality of physically separated configurations.

The storage unit 21 is a data readable-writable storage device such as a DRAM, an SRAM, a flash memory, and a hard disk. The storage unit 21 functions as storage means of the terminal device 20. The storage unit 21 stores prediction models (learned models) such as quality prediction model and intention prediction model. The information will be described later.

The communication unit 22 is a communication interface for communicating with another device (for example, the server 10) on a network. For example, the communication unit 22 is a network interface. For example, the communication unit 22 is a LAN interface such as an NIC. It should be noted that the communication unit 22 may be a wired interface or a wireless interface. The communication unit 22 functions as communication means of the terminal device 20. The communication unit 22 communicates with another communication device under the control of the control unit 23. The communication unit 22 may have a common configuration with the communication unit 25.

The control unit 23 is a controller that controls each unit of the terminal device 20. The control unit 23 is realized by a processor such as a CPU and an MPU. For example, the control unit 23 is realized by the processor executing various programs stored in the storage device in the terminal device 20 using a RAM or the like as a work area. It should be noted that the control unit 23 may be realized by an integrated circuit such as an ASIC and an FPGA. Each of the CPU, MPU, ASIC, and FPGA can be regarded as a controller. In addition, the control unit 23 may be realized by a GPU in addition to or instead of the CPU.

The control unit 23 includes an acquisition unit 231, a learning unit 232, a prediction unit 233, and a communication control unit 234. The blocks that configure the control unit 23 (acquisition unit 231 to communication control unit 234) are functional blocks indicating the functions of the control unit 23. These functional blocks may be software blocks or hardware blocks. For example, each of the functional blocks described above may be one software module realized by software (including a micro program) or may be one circuit block on a semiconductor chip (die). As a matter of course, each functional block may be one processor or one integrated circuit. The control unit 23 may be configured by functional units different from the functional blocks described above. Any method can be used in configuring the functional blocks.

The sensor unit 24 is a sensor that acquires various types of information for predicting the quality of the communication path for connecting to the upstream network (communication path formed by the communication unit 25). For example, if the communication path is a radio communication path, the sensor unit 24 is, for example, a sensor that detects the reception S/N of radio waves received from a base station or an access point. As a matter of course, the information acquired by the sensor unit 24 is not limited to the reception S/N insofar as the information can be used for communication path quality prediction.

Each of the plurality of communication units 25 is a communication interface for connecting to the upstream network. The plurality of communication units 25 respectively form different communication paths to the server 10. It should be noted that the plurality of communication units 25 may respond to different radio access technologies (radio communication schemes). For example, the communication unit 251 may respond to LTE or NR and the communication unit 252 may respond to Wi-Fi. In addition, the communication unit 25 may respond to a radio access technology such as Bluetooth and LPWA. It should be noted that the communication unit 25 may have a common configuration with the communication unit 22.

### <2-1-3. Prediction Model (Learned Model)>

Next, the prediction model (learned model) used in the present embodiment will be described.

### <2-1-3-1. Regarding Learned Model>

As described above, the storage unit 11 of the server 10 and the storage unit 21 of the terminal device 20 store prediction models such as quality prediction model and intention prediction model. The quality prediction model is a learned model for predicting the future quality of the bearer currently used by the terminal device 20. In addition, the intention prediction model is a learned model for predicting a user's bearer-related connection intention.

The learned model is, for example, a machine learned model such as a neural network model. The neural network model is configured from layers called an input layer including a plurality of nodes, an intermediate layer (or hidden layer), and an output layer, and each node is connected via an edge. Each layer has a function called an activation function, and each edge is weighted. The learned model has one or more intermediate layers (or hidden layers). In a case where the learned model is a neural network model, learning the learned model means, for example, setting the number of intermediate layers (or hidden layers), the number of nodes in each layer, the weight of each edge, or the like.

Here, the neural network model may be a model based on deep learning. In this case, the neural network model may be a model in the form that is called a deep neural network (DNN). In addition, the neural network model may be a model in the form that is called a convolution neural network (CNN), a recurrent neural network (RNN), or a long short-term memory (LSTM). As a matter of course, the neural network model is not limited to these forms of models.

In addition, the learned model is not limited to a neural network model. For example, the learned model may be a model based on reinforcement learning. In reinforcement learning, a value-maximizing action (setting) is learned through trial and error. In addition, the learned model may be a logistic regression model.

It should be noted that the learned model may be configured by a plurality of models. For example, the learned model may be configured from a plurality of neural network models. More specifically, the learned model may be configured from a plurality of neural network models selected from, for example, CNN, RNN, and LSTM. In a case where the learned model is configured from a plurality of neural network models, these plurality of neural network models may be in a dependent relationship or in a parallel relationship.

As described above, the storage unit 11 of the server 10 and the storage unit 21 of the terminal device 20 store learned models (prediction models) such as quality prediction model and intention prediction model. The learned model is used in bearer switching processing, which will be described later. The learned model will be described in detail below.

The quality prediction model is, for example, a learned model (trained model) trained using at least one of an action parameter related to radio communication of a user and an environmental parameter related to the radio communication related to the action parameter as input data and communication quality-related information as a correct answer label (teaching data). When the terminal device 20 inputs a parameter to the quality prediction model, the quality prediction model outputs, for example, the future communication quality of the corresponding bearer (for example, 0 (good) to 1 (bad)).

The intention prediction model is, for example, a learned model (trained model) trained using at least one of an action parameter related to radio communication of a user and an environmental parameter related to the radio communication related to the action parameter as input data and a value indicating whether a user wants to keep using the current bearer as a correct answer label (teaching data). When the terminal device 20 inputs a parameter to the intention prediction model, the intention prediction model outputs, for example, how much the user wants to use the corresponding bearer (for example, 0 (wanting to use) to 1 (not wanting to use)). In the following description, the information indicating whether a user wants to keep using the current bearer may be referred to as connection intention information.

It should be noted that although character information such as "quality prediction model" and "intention prediction model" are described as information stored in the storage unit 11 and the storage unit 21 in Figs. 4 and 5, in practice, the storage unit 11 and the storage unit 21 store, for example, a character string or a numerical value indicating a model structure or connection coefficient.

The quality prediction model may be a learned model trained using data that is a set of parameter (action parameter and/or environmental parameter) and communication quality information as learning data so as to output information on the future communication quality of the corresponding bearer when a parameter is input. In this case, the learned model may be a model that includes an input layer for parameter input, an output layer for communication quality information output, a first element belonging to a non-output layer that is one of the layers from the input layer to the output layer, and a second element with a value calculated based on the first element and the weight of the first element and is for causing a computer to function so as to output communication quality information from the output layer in accordance with the parameter input to the input layer by performing, with respect to information input to the input layer, an operation based on the first element and the weight of the first element (that is, connection coefficient) using each element belonging to each non-output layer as the first element.

In addition, the intention prediction model may be a learned model trained using data that is a set of parameter (action parameter and/or environmental parameter) and connection intention information as learning data so as to output the corresponding connection intention information when a parameter is input. In this case, the learned model may be a model that includes an input layer for parameter input, an output layer for connection intention information output, a first element belonging to a non-output layer that is one of the layers from the input layer to the output layer, and a second element with a value calculated based on the first element and the weight of the first element and is for causing a computer to function so as to output connection intention information from the output layer in accordance with the parameter input to the input layer by performing, with respect to information input to the input layer, an operation based on the first element and the weight of the first element (that is, connection coefficient) using each element belonging to each non-output layer as the first element.

Here, it is assumed that the learned model is realized by a neural network with one or more intermediate layers such as DNN. In this case, the first element included in the learned model corresponds to any node of the input layer or the intermediate layer. In addition, the second element corresponds to the next node, which is a node to which a value is transmitted from the node corresponding to the first element. In addition, the weight of the first element corresponds to a connection coefficient that is a weight considered with respect to the value transmitted from the node corresponding to the first element to the node corresponding to the second element.

In addition, it is assumed that the learned model is realized by a regression model indicated by "y = a1 * x1 + a2 * x2 +... + ai * xi". In this case, the first element included in the learned model corresponds to the input data (xi) such as x1 and x2. In addition, the weight of the first element corresponds to the coefficient ai corresponding to xi. Here, the regression model can be regarded as a simple perceptron that has input layer and output layer. In a case where each model is regarded as a simple perceptron, the first element corresponds to any node of the input layer and the second element can be regarded as a node of the output layer.

The terminal device 20 calculates information to be output using a model having any structure such as a neural network and a regression model. Specifically, the learned model has a coefficient set such that the communication quality information or the connection intention information is output in a case where at least one of the action parameter and the environmental parameter is input. For example, the server 10 sets the coefficient based on the degree of similarity between actual measurement data on the communication quality and the value obtained by inputting at least one of the action parameter and the environmental parameter to the learned model. The server 10 uses such a learned model to generate the communication quality information or the connection intention information from at least one of the action parameter and the environmental parameter.

It should be noted that in the example described above, a model that outputs communication quality information or connection intention information in the case of parameter input has been described as an example of the learned model. However, the learned model according to the embodiment may be a model that is generated based on the result of repeated data input and output to and from the learned model.

In addition, in a case where the server 10 performs learning or output information generation using generative adversarial networks (GAN), the learned model may be a model that configures a part of the GAN.

It should be noted that a learning device that learns the learned model may be the server 10, the terminal device 20, or another information processing device. For example, it is assumed that the server 10 learns the learned model. In this case, the server 10 learns the learned model and stores the learned model in the storage unit 11. More specifically, the server 10 sets the connection coefficient of the learned model such that the learned model outputs the communication quality information or the connection intention information when at least one of the action parameter and the environmental parameter is input to the learned model.

For example, the server 10 or the terminal device 20 outputs the communication quality information or the connection intention information by inputting a parameter to the node of the input layer of the learned model, tracing each intermediate layer, and propagating data to the output layer of the learned model. Then, the server 10 or the terminal device 20 corrects the connection coefficient of the learned model based on the difference between the communication quality information or connection intention information actually output by the learned model and the communication quality information or connection intention information as the correct answer label (teaching data). At this time, the server 10 or the terminal device 20 may correct the connection coefficient using a technique such as back propagation. At this time, the server 10 or the terminal device 20 may correct the connection coefficient based on the cosine similarity between the vector indicating the information as the teaching data and the vector indicating the value actually output by the learned model.

It should be noted that any learning algorithm may be used for the learning. For example, the server 10 or the terminal device 20 may learn the learned model using a learning algorithm such as neural network, support vector machine, clustering, reinforcement learning, random forest, and decision tree.

In addition, the learning algorithm used in the present embodiment may be independently learned by each of the server 10 and the terminal device 20 or may be learned in cooperation by the server 10 and the terminal device 20. Here, federated learning is given as an example of a learning algorithm that the server 10 and the terminal device 20 learn in cooperation. The federated learning will be described below.

### <2-1-3-2. Regarding Federated Learning>

Federated learning is a type of machine learning model-optimizing algorithm. By federated learning, a learned model can be trained without externally exposing private data of individual devices.

Fig. 6 is a diagram illustrating federated learning. In the federated learning, a group of devices with data and a server that manages the devices cooperate for learning to proceed. First, each device downloads a model from the cloud server, trains the model with its own data, and updates the model. Then, the devices upload the updated models to the server. The server creates a new model by aggregating the updated models in quantity. Then, the server distributes the new model to the devices. Each device learns using the new model. Each device and the server repeat these processes. In the federated learning, the model is updated in each device, the updated model is uploaded to the cloud server, and thus learning can be performed without exposing the private data in each device.

In the present embodiment, federated learning is used in predicting the future communication quality of the currently connected bearer and predicting the user's connection intention. For these predictions, it is effective to use access point identification information such as user action log and BSSID. However, user privacy information is read from the information. For example, the user's tastes and preferences are read from the user's action log. In addition, current user location information is read from BSSID. Therefore, in the present embodiment, by applying federated learning to these predictions, high-accuracy prediction and user privacy protection can be achieved at the same time.

Fig. 7 is a diagram illustrating an example of applying federated learning to the predictions according to the present embodiment (communication quality prediction and connection intention prediction).

The generation of the quality prediction model will be described first. Each of the plurality of terminal devices 20 stores, in the storage unit 21, at least one of an action parameter related to radio communication of a user and an environmental parameter related to the radio communication related to the action parameter as a feature quantity and communication quality-related information as a correct answer label (teaching data) (step S1). Then, each of the plurality of terminal devices 20 executes model learning using the data in the terminal and uploads the updated model to the server 10 (step S2). The server 10 aggregates the uploaded models to generate a new model. Then, the server 10 distributes the new model to each terminal device 20 (step S3).

Next, the generation of the intention prediction model will be described. Each of the plurality of terminal devices 20 stores, in the storage unit 21, at least one of an action parameter related to radio communication of a user and an environmental parameter related to the radio communication related to the action parameter as a feature quantity and a value indicating whether a user wants to keep using the current bearer as a correct answer label (teaching data) (step S1). Then, each of the plurality of terminal devices 20 executes model learning using the data in the terminal and uploads the updated model to the server 10 (step S2). The server 10 aggregates the uploaded models to generate a new model. Then, the server 10 distributes the new model to each terminal device 20 (step S3).

The server 10 and the terminal device 20 are capable of generating a prediction model without data collection by repeating these processes (steps S1 to S3).

### <2-1-4. Functional Configuration of Communication System>

Next, the functional configuration of the communication system 1 will be described.

Fig. 8 is a diagram illustrating the functional configuration of the communication system 1. More specifically, Fig. 8 is a diagram illustrating a functional configuration required when the server 10 and the terminal device 20 generate a prediction model by federated learning and perform bearer switching processing based on the generated prediction model.

First, the acquisition unit 231 of the terminal device 20 acquires an action parameter related to radio communication of a user and an environmental parameter related to the radio communication related to the action parameter. The action parameter may be sensor information acquired by the sensor unit 24. The sensor information may be information given from the outside of the terminal device 20. The environmental parameter may be information on the currently used bearer acquired by the communication control unit 234. The action parameter and environmental parameter will be described later.

The acquisition unit 231 of the terminal device 20 shapes the acquired parameters into appropriate forms and stores the shaped parameters in the storage unit 21 as data for learning. At this time, the acquisition unit 231 assigns a correct answer label regarding the user's connection intention to the data for learning.

Next, the learning unit 232 of the terminal device 20 learns the prediction model (quality prediction model and intention prediction model) based on the data for learning stored in the storage unit 21. At this time, the learning unit 232 performs the learning at an appropriate timing. For example, the learning unit 232 performs the learning at a timing when the terminal device 20 is not used by the user, the terminal device 20 is in the process of charging, and/or the battery is sufficient.

Next, the communication unit 22 of the terminal device 20 uploads the prediction model generated by learning to the server 10. At this time, the communication unit 22 uploads the prediction model to the server 10 at an appropriate timing. For example, the communication unit 22 uploads the prediction model to the server 10 at a timing when the communication unit 22 is connected to free Wi-Fi, a predetermined daily timing, and/or a regular timing such as month-end.

The server 10 generates one new prediction model by aggregating the prediction models uploaded from the plurality of terminal devices 20. Then, the server 10 distributes the new prediction model to the terminal devices 20. The communication unit 22 of the terminal device 20 stores the new prediction model in the storage unit 21.

The prediction unit 233 of the terminal device 20 acquires the prediction model (quality prediction model and intention prediction model) from the storage unit 21. Then, the prediction unit 233 acquires a prediction result by inputting the parameter acquired by the acquisition unit 231 to the prediction model. More specifically, the prediction unit 233 acquires a prediction result on the future communication quality of the bearer currently used by the user by inputting the action parameter and/or environmental parameter to the quality prediction model. In addition, the prediction unit 233 acquires a prediction result on the user's connection intention related to the currently used bearer by inputting the action parameter and/or environmental parameter to the intention prediction model. It should be noted that the prediction unit 233 predicts the user's connection intention at predetermined time intervals after the communication quality of the currently used bearer satisfies a predetermined condition (for example, after the predicted value of the communication quality falls below a predetermined threshold).

The communication control unit 234 of the terminal device 20 performs bearer switching processing based on the prediction result. For example, the communication control unit 234 switches the currently used bearer (for example, Wi-Fi) to another bearer (for example, cellular network) in a case where the predicted value of the communication quality of the currently used bearer is below a predetermined threshold and the connection intention prediction result is a prediction that the user wants to switch the bearer.

### <2-2. Operation of Communication System>

The configuration of the communication system 1 has been described above, and the operation of the communication system 1 configured as described above will be described next. The operation of the communication system 1 is divided into prediction model learning processing and bearer switching processing using the prediction model.

As described above, the prediction model (quality prediction model and intention prediction model) is a learned model generated based on at least one of action parameter and environmental parameter. The prediction model (quality prediction model and intention prediction model) may also be a learned model generated based on both action parameter and environmental parameter.

Although the prediction model in the following description is an intention prediction model, the prediction model may also be a quality prediction model. In this case, the information used as the correct answer label (teaching data) is appropriately replaced with communication quality-related information.

### <2-2-1. Learning Processing>

The prediction model learning processing will be described first. Fig. 9 is a flowchart illustrating the learning processing. The following processing is executed by, for example, the control unit 23 of the terminal device 20. The learning processing will be described below with reference to the flowchart of Fig. 9.

First, the terminal device 20 starts connecting to a predetermined bearer (step S101). Then, the terminal device 20 starts acquiring a log related to radio communication (step S102). For example, the terminal device 20 starts acquiring an action parameter related to radio communication of a user and an environmental parameter related to the radio communication related to the action parameter.

Here, the following (A1) to (A3) can be assumed as examples of the action parameter.

(A1) Walking state
(A2) Acceleration applied to the terminal device 20
(A3) Parameter indicating whether reconnection is implemented within the most recent predetermined time

Here, (A1) is, for example, a parameter indicating the user's walking state and is, for example, a parameter indicating whether the user is currently walking or standing still. In addition, (A2) is the acceleration value detected by the accelerometer of the terminal device 20. (A3) is a parameter indicating whether or not the user has reconnected to the same bearer within n seconds after disconnection from the predetermined bearer.

In addition, the following (B1) to (B7) can be assumed as examples of the environmental parameter.

(B1) Predicted value of the communication quality
(B2) Radio field intensity
(B3) Staying packet count
(B4) Communication speed
(B5) Packet counter
(B6) Connection frequency band
(B7) Communication status

Here, (B1) is a value indicating the predicted deterioration of the communication quality of the currently connected bearer. (B2) is a parameter indicating how strong a signal can be received by the terminal device 20 and is, for example, a received signal strength indicator (RSSI). (B3) is a parameter indicating the number of packets currently staying in the terminal device 20. (B4) is the theoretical communication speed value. (B5) is a value obtained by counting received and/or transmitted packets. (B6) is a parameter indicating the currently connected frequency band and is, if the currently connected bearer is Wi-Fi, a value indicating whether the currently connected frequency band is 2.4 GHz / 5 GHz. (B7) is a parameter indicating the communication status of the currently connected bearer.

It should be noted that the parameter acquired by the terminal device 20 is not limited to the above examples. For example, the action parameter may include a parameter indicating the user's monthly cumulative data usage and a parameter related to an application currently used by the user as in (C1) to (C2) below. In addition, the environmental parameter may include a parameter related to the battery consumption of the terminal device 20, the importance of the current traffic, and information related to the current location of the terminal device 20 as in (C3) to (C5) below. Examples of the parameter acquired by the terminal device 20 are as follows.

(C1) Parameter indicating the user's monthly cumulative data usage
(C2) Application currently used by the user and the average throughput of the communication used by the application
(C3) Parameter related to the battery consumption of the terminal device 20
(C4) Importance of the current traffic
(C5) Information related to the current location of the terminal device 20
(C6) Context, activity recognition result
(C7) Amount of remaining data that the user can use, price plan
(C8) Surrounding disconnection status
(C9) User preference (for example, whether the user wants to use Wi-Fi)
(C10) Communication status of a bearer other than the currently used bearer

Next, the terminal device 20 determines whether the connection to the bearer connected in step S101 has been disconnected (step S103). In the case of non-disconnection (step S103: No), step S103 is repeated until the connection is disconnected. On the other hand, in the case of disconnection (step S103: Yes), it is determined, based on user behavior-related information, whether or not the user wants to continue with communication using the current bearer (bearer connected in step S101) (step S104).

The following (D1) to (D8) are assumed as behaviors (behaviors in favor of switching) in a case where the user does not want to continue with communication using the current bearer.

(D1) User operation of turning off the connection to the current bearer
(D2) User response to the notification displayed on the terminal device 20 (for example, user response of wanting to switch to the notification asking whether the bearer should be switched or not)
(D3) Status of the user's communication use in the current month (for example, whether the data usage is insufficient at the end of the month)
(D4) User operation of connecting to another access point (for example, user operation of connecting to another service set identifier (SSID))
(D5) User operation of turning off the screen of the terminal device 20
(D6) User operation of throwing the terminal device 20
(D7) User operation of ending the currently used application
(D8) User operation of restarting the terminal device 20

In addition, the following (E1) to (E4) are assumed as behaviors (behaviors against switching) in a case where the user wants to continue with communication using the current bearer.

(E1) User operation of reconnecting the terminal device 20 to the same access point (for example, user operation of reconnecting to the same SSID)
(E2) User operation of reconnecting to the current bearer (for example, Wi-Fi) (for example, turning Wi-Fi on, off, and then on)
(E3) User operation of putting the terminal device 20 into the airplane mode and returning immediately
(E4) User operation of wandering around looking for a direction with strong radio waves

In a case where it is determined that the user wants to continue with communication using the current bearer (step S104: Yes), the terminal device 20 labels the acquired log in whole or in part as a sample in a case where the user wants to continue with the connection (step S105). On the other hand, in a case where it is determined that the user does not want to continue with communication using the current bearer (step S104: No), the terminal device 20 labels the acquired log in whole or in part as a sample in a case where the user does not want to continue with the connection (step S106).

Here, the labeling will be described with a specific example. For example, it is assumed that the terminal device 20 determines that "the user wants to keep using Wi-Fi" from the fact that "after disconnection from Wi-Fi (predetermined access point), the user connects to the same Wi-Fi (same access point) and uses it for at least tens of seconds". In this case, the terminal device 20 performs labeling as follows.

### (Preprocessing)

First, the terminal device 20 performs the following processing as preprocessing with respect to the acquired log. First, the terminal device 20 stores a parameter for each Wi-Fi session in the terminal device 20. Then, the terminal device 20 determines whether or not the connection is to the same access point based on the degree of similarity between the Wi-Fi parameters. Then, the terminal device 20 aggregates connections to the same access point. Then, the terminal device 20 calculates, regarding connection to the same access point, the time between the previous Wi-Fi disconnection and the next Wi-Fi connection.

### (Labeling)

The terminal device 20 searches the preprocessed log for a sample that satisfies the following rule. "The user disconnects Wi-Fi and then reconnects within n seconds, and continues to use Wi-Fi for at least m seconds after the reconnection". The terminal device 20 labels a sample that satisfies this rule as a sample in a case where the user wants to continue with Wi-Fi connection.

### (Another Example of Labeling)

It should be noted that the labeling is not limited to this example. For example, the terminal device 20 may label a sample at a time when a user reconnects communication using the same bearer (the access point may or may not be the same) after disconnecting communication using a predetermined bearer (for example, Wi-Fi or cellular) and continues to use the communication for a predetermined time or longer after the reconnection as a sample in a case where the user wants to continue with communication using the predetermined bearer.

Returning to the flow of Fig. 9, the terminal device 20 learns the prediction model based on the acquired parameter (for example, at least one of the action parameter and the environmental parameter) (step S107). Then, the terminal device 20 uploads the learned prediction model to the server 10 (step S108). After the uploading is completed, the terminal device 20 terminates the learning processing.

The server 10 acquires the prediction models from the plurality of terminal devices 20. Then, a new prediction model is generated by aggregating the uploaded prediction models. Then, the server 10 distributes the new prediction model to each terminal device 20. The terminal device 20 stores the new prediction model in the storage unit 21.

### <2-2-2. Bearer Switching Processing>

Next, the bearer switching processing will be described. Fig. 10 is a flowchart illustrating the bearer switching processing. The following processing is executed by, for example, the control unit 23 of the terminal device 20. The bearer switching processing will be described below with reference to the flowchart of Fig. 10.

First, the terminal device 20 starts connecting to a predetermined bearer (step S201). Then, the terminal device 20 starts acquiring action parameter and environmental parameter (step S202). The action parameter and environmental parameter are the same as the action parameter and the environmental parameter described in the above

### <2-2-1. Learning Processing>.

Next, the terminal device 20 acquires prediction model (quality prediction model, intention prediction model) information from the storage unit 21. Then, the terminal device 20 predicts the future communication quality of the currently connected bearer and predicts the user's connection intention related to the bearer by inputting the parameter (action parameter and/or environmental parameter) acquired in step S202 to the prediction model (step S203). More specifically, the terminal device 20 acquires a prediction result on the future communication quality of the currently used bearer by inputting the action parameter and/or environmental parameter to the quality prediction model. In addition, the terminal device 20 acquires a prediction result on the user's connection intention related to the currently used bearer by inputting the action parameter and/or environmental parameter to the intention prediction model.

Next, the terminal device 20 determines, based on the result of step S203, whether or not the communication quality of the currently used bearer deteriorates (step S204). For example, the terminal device 20 determines whether or not the output value of the quality prediction model is below a predetermined threshold. It should be noted that the terminal device 20 may determine whether or not the communication quality of the currently used bearer is deteriorating based on, for example, the current output value of the sensor unit 24 or the communication unit 25 instead of the prediction result of the quality prediction model.

In the case of no communication quality deterioration (step S204: No), the terminal device 20 returns the processing to step S202. In the case of communication quality deterioration (step S204: Yes), the terminal device 20 determines whether or not the user wants to continue with the connection to the currently used bearer (step S205).

In a case where the user wants to continue with the connection (step S205: Yes), the terminal device 20 returns the processing to step S202. In this case, the terminal device 20 continues with the connection to the current bearer. It should be noted that the terminal device 20 may wait for a predetermined time before the return to the processing of step S202.

On the other hand, in a case where the user does not want to continue with the connection (step S205: No), the terminal device 20 switches the communication using the current bearer to communication using another bearer (step S206). After the switching is completed, the terminal device 20 terminates the bearer switching processing.

### <<3. Second Embodiment>>

Next, the communication system 1 of a second embodiment will be described. In the second embodiment, the communication system 1 of a first embodiment will be described more specifically.

### (Specific Example 1)

In the first embodiment, the terminal device 20 predicts a radio communication scheme desired by a user. Specifically, in the first embodiment, the terminal device 20 predicts whether or not the user is to continue to use a bearer. In the second embodiment, the terminal device 20 predicts a bearer that a user (and/or an application used by the user) wants to use in addition to whether or not the user is to continue to use the bearer. In a case where the user (and/or application) does not want to continue to use the bearer, an optimal bearer desired by the user (and/or application) can be selected by switching to a predicted bearer.

### (Specific Example 2)

In the first embodiment, the terminal device 20 predicts a radio communication scheme desired by a user. Specifically, in the first embodiment, the terminal device 20 predicts the user's connection intention. In the second embodiment, the terminal device 20 predicts the connection intention of an application used by the user in addition to the user's connection intention. For example, the terminal device 20 predicts whether the application used by the user wants to continue to use the currently connected bearer and switches the bearer in a case where the application used by the user does not want to continue to use the currently connected bearer. As a result, user experience (UX) deterioration attributable to the application not fulfilling radio quality requirements is prevented.

### (Specific Example 3)

Further, in the second embodiment, the terminal device 20 acquires and utilizes for prediction detailed information such as application operation or right and status of use and information such as communication quality and bearer switching instruction that the application requires in relation to the terminal. In the second embodiment, as in the first embodiment, the communication system 1 uses federated learning for learning of a predictor (learned model). As a result, the communication system 1 is capable of realizing safe machine learning without transmitting application-related and acquired sensitive information to the server 10.

It should be noted that in the following description, the communication system 1 of the second embodiment is assumed to have every function for realizing the operations described in Specific Examples 1 to 3, and yet it is not imperative to implement every operation of Specific Examples 1 to 3. For example, Specific Examples 1, 2, and 3 may be implemented independently. In addition, only Specific Examples 1 and 2 may be implemented, only Specific Examples 1 and 3 may be implemented, or only Specific Examples 2 and 3 may be implemented.

The communication system 1 according to the second embodiment will be described below. It should be noted that in the following description, "application used by user" may be simply referred to as "application". In addition, in the following description, "user and/or application" can be rephrased as "application".

### <3-1. Configuration of Communication System>

The communication system 1 of the second embodiment is identical in configuration to the communication system 1 of the first embodiment illustrated in Fig. 3. As in the case of the communication system 1 of the first embodiment illustrated in Fig. 3, the communication system 1 includes the server 10 and the terminal device 20 configured to be connectable to a plurality of communication paths (plurality of bearers).

### <3-1-1. Configuration of Server>

Fig. 11 is a diagram illustrating a configuration example of the server 10 of the second embodiment. Basically, the server 10 of the second embodiment is identical in configuration to the server 10 of the first embodiment. However, in the server 10 of the second embodiment, the storage unit 11 stores a connection bearer prediction model in addition to the quality prediction model and intention prediction model. It should be noted that the server 10 does not necessarily have to store the intention prediction model in a case where the connection bearer prediction model is stored. The connection bearer prediction model will be described later. The other configurations of the server 10 are the same as those of the first embodiment.

### <3-1-2. Configuration of Terminal Device>

Fig. 12 is a diagram illustrating a configuration example of the terminal device 20 of the second embodiment.

In the second embodiment, the storage unit 21 stores the connection bearer prediction model in addition to the quality prediction model and intention prediction model. It should be noted that the storage unit 21 does not necessarily have to store the intention prediction model in a case where the connection bearer prediction model is stored. The connection bearer prediction model will be described later.

In addition, the control unit 23 includes a preprocessing unit 235 in addition to the acquisition unit 231, the learning unit 232, the prediction unit 233, and the communication control unit 234. The blocks that configure the control unit 23 (acquisition unit 231 to preprocessing unit 235) are functional blocks indicating the functions of the control unit 23. These functional blocks may be software blocks or hardware blocks. For example, each of the functional blocks described above may be one software module realized by software (including a micro program) or may be one circuit block on a semiconductor chip (die). As a matter of course, each functional block may be one processor or one integrated circuit. The control unit 23 may be configured by functional units different from the functional blocks described above. Any method can be used in configuring the functional blocks.

The other configurations of the terminal device 20 are the same as those of the first embodiment.

### <3-1-3. Prediction Model (Learned Model)>

Next, the prediction model (learned modell) used in the second embodiment will be described.

### <3-1-3-1. Regarding Learned Model>

As described above, the storage unit 11 of the server 10 and the storage unit 21 of the terminal device 20 store prediction models such as quality prediction model, intention prediction model, and connection bearer prediction model.

The quality prediction model is a learned model for predicting the future quality of the bearer currently used by the terminal device 20.

In addition, the intention prediction model is a learned model for predicting a user's and/or application's bearer-related connection intention. In the second embodiment, the target of connection intention inferred by the intention prediction model includes not only the user but also the application used by the user. In the following description, the application used by the user may be simply referred to as the application.

The connection bearer prediction model is a learned model for predicting a bearer that the user and/or application wants to use.

The learned model is, for example, a machine learning model such as a neural network model. The learned model is the same as in the first embodiment. The following (1) to (4) are assumed as examples of parameter/teaching data (label) in learning the learned model.

### (1) Application information:

Application information is assumed as a parameter for learning. Application name, transmission-reception amount, category, media playback, various rights, tap amount, time of use, and so on are assumed as examples of the application information.

### (2) Information on selectable bearer:

Information on a selectable bearer is assumed as a parameter for learning. Bearer type, band, radio field intensity, encryption, billing amount, contract information, stability, delay information, and so on are assumed as examples of the information on a selectable bearer.

### (3) Whether application/user has switched bearer in less than certain time

The information of whether or not the application/user has switched the bearer in less than a certain time is assumed as a label for learning. This information is used for the model to learn a bearer frequently used by the user/application. In the case of a bearer that does not meet the application's requirements, the application should perform bearer switching itself using, for example, framework API. In addition, in the case of a bearer that does not meet the user's requirements, the user should perform manual bearer switching. Therefore, the communication system 1 (for example, the terminal device 20) labels the parameter with a low score in a case where the application/user has switched the bearer in less than a certain time and labels the parameter with a high score in a case where the same bearer has been continuously used for a certain time or longer without bearer switching.

### (4) Communication quality information required by application used by user:

Communication quality information required by the application used by the user is assumed as a label for learning. This information is used for the model to learn information on a bearer required by the application used by the user. In a case where a bearer does not meet the application's requirements and the application uses, for example, framework API to require a bearer with a specific communication quality, the information is treated as teaching data as information on a bearer that the application wants to use.

The quality prediction model is the same as the quality prediction model of the first embodiment. The intention prediction model and connection bearer prediction model of the second embodiment will be described in detail below.

The intention prediction model is, for example, a learned model (trained model) trained using at least one of an action parameter related to radio communication of a user and an environmental parameter related to the radio communication related to the action parameter as input data and a value indicating whether a user and/or application wants to keep using the current bearer as a correct answer label (teaching data). When the terminal device 20 inputs a parameter to the intention prediction model, the intention prediction model outputs, for example, how much the user and/or application wants to use the corresponding bearer (for example, 0 (wanting to use) to 1 (not wanting to use)). In the following description, the information indicating whether a user and/or application wants to keep using the current bearer may be referred to as connection intention information.

The intention prediction model may be a model trained using data that is a set of parameter (action parameter and/or environmental parameter) and connection intention information as learning data so as to output the corresponding connection intention information when a parameter is input. In this case, the intention prediction model may be a model that includes an input layer for parameter input, an output layer for connection intention information output, a first element belonging to a non-output layer that is one of the layers from the input layer to the output layer, and a second element with a value calculated based on the first element and the weight of the first element and is for causing a computer to function so as to output connection intention information from the output layer in accordance with the parameter input to the input layer by performing, with respect to information input to the input layer, an operation based on the first element and the weight of the first element (that is, connection coefficient) using each element belonging to each non-output layer as the first element.

The connection bearer prediction model is, for example, a learned model (trained model) trained using at least one of an action parameter related to radio communication of a user and an environmental parameter related to the radio communication related to the action parameter as input data and a value indicating which current bearer the user and/or application wants to use as a correct answer label (teaching data). When the terminal device 20 inputs a parameter to the connection bearer prediction model, the connection bearer prediction model outputs, for example, information related to a bearer that the user and/or application wants to use. In the following description, the information related to a bearer that the user and/or application wants to use may be referred to as connection bearer information or desired bearer information.

The connection bearer prediction model may be a model trained using data that is a set of parameter (action parameter and/or environmental parameter) and connection bearer information (desired bearer information) as learning data so as to output the corresponding connection bearer information (desired bearer information) when a parameter is input. In this case, the connection bearer prediction model may be a model that includes an input layer for parameter input, an output layer for connection bearer information (desired bearer information) output, a first element belonging to a non-output layer that is one of the layers from the input layer to the output layer, and a second element with a value calculated based on the first element and the weight of the first element and is for causing a computer to function so as to output connection bearer information (desired bearer information) from the output layer in accordance with the parameter input to the input layer by performing, with respect to information input to the input layer, an operation based on the first element and the weight of the first element (that is, connection coefficient) using each element belonging to each non-output layer as the first element.

The terminal device 20 calculates information to be output using a model having any structure such as a neural network and a regression model. Specifically, the learned model has a coefficient set such that the communication quality information, the connection intention information, or the connection bearer information (desired bearer information) is output in a case where at least one of the action parameter and the environmental parameter is input. For example, the server 10 sets the coefficient based on the degree of similarity between actual measurement data on the communication quality and the value obtained by inputting at least one of the action parameter and the environmental parameter to the learned model. The server 10 uses such a learned model to generate the communication quality information, the connection intention information, or the connection bearer information (desired bearer information) from at least one of the action parameter and the environmental parameters.

It should be noted that in the example described above, a model that outputs communication quality information, connection intention information, or connection bearer information (desired bearer information) in the case of parameter input has been described as an example of the learned model. However, the learned model according to the embodiment may be a model that is generated based on the result of repeated data input and output to and from the learned model.

In addition, in a case where the server 10 performs learning or output information generation using generative adversarial networks (GAN), the learned model may be a model that configures a part of the GAN.

It should be noted that a learning device that learns the learned model (for example, quality prediction model, intention prediction model, or connection bearer prediction model) may be the server 10, the terminal device 20, or another information processing device. For example, it is assumed that the server 10 learns the learned model. In this case, the server 10 learns the learned model and stores the learned model in the storage unit 11. More specifically, the server 10 sets the connection coefficient of the learned model such that the learned model outputs the communication quality information, the connection intention information, or the connection bearer information (desired bearer information) when at least one of the action parameter and the environmental parameter is input to the learned model.

For example, the server 10 or the terminal device 20 outputs the communication quality information, the connection intention information, or the connection bearer information (desired bearer information) by inputting a parameter to the node of the input layer of the learned model, tracing each intermediate layer, and propagating data to the output layer of the learned model. Then, the server 10 or the terminal device 20 corrects the connection coefficient of the learned model based on the difference between the communication quality information or connection intention information actually output by the learned model and the communication quality information, connection intention information, or connection bearer information (desired bearer information) as the correct answer label (teaching data). At this time, the server 10 or the terminal device 20 may correct the connection coefficient using a technique such as back propagation. At this time, the server 10 or the terminal device 20 may correct the connection coefficient based on the cosine similarity between the vector indicating the information as the teaching data and the vector indicating the value actually output by the learned model.

It should be noted that any learning algorithm may be used for the learning. For example, the server 10 or the terminal device 20 may learn the learned model using a learning algorithm such as neural network, support vector machine, clustering, reinforcement learning, random forest, and decision tree.

In addition, the learning algorithm used in the present embodiment may be independently learned by each of the server 10 and the terminal device 20 or may be learned in cooperation by the server 10 and the terminal device 20. Here, federated learning is given as an example of a learning algorithm that the server 10 and the terminal device 20 learn in cooperation.

### <3-1-3-2. Regarding Federated Learning>

The federated learning is as described in the first embodiment. The terminal device 20 utilizes the federated learning to predict a bearer suitable for the application. The terminal device 20 predicts a bearer frequently used by the application or the user in using the application. The following (1) and (2) are assumed as the advantages of utilizing the federated learning.

(1) The terminal device 20 is capable of selecting an optimal bearer by guessing the user's application-specific wish. For example, the terminal device 20 is capable of avoiding an unsafe bearer during settlement. In addition, the terminal device 20 is capable of using a stable bearer while the user is watching a video. The terminal device 20 is capable of using a bearer that is not charged while downloading a large file.
(2) The terminal device 20 is capable of predicting an individual's tendency of bearer use. For example, the terminal device 20 is capable of predicting individuals' tendencies of bearer use such as wanting to actively use free Wi-Fi and wanting to avoid a decrease in bandwidth despite billing during the use of a predetermined application.

In addition, by using the federated learning, it is possible to solve the problem that information is insufficient in each terminal device 20 and learning/prediction is not possible. By using the federated learning, highly accurate prediction using the collective intelligence of multiple terminal devices 20 becomes possible. Privacy protection is also realized by using the federated learning. For example, by using the federated learning, sensitive information required for learning (for example, application information or bearer information) does not have to be uploaded to the server 10. In addition, it is possible to improve accuracy by implementing sequential learning and reflect individual use tendencies by utilizing clustering.

The generation of the intention prediction model and the generation of the connection bearer prediction model will be described below with reference to Fig. 7. It should be noted that the generation of the quality prediction model is the same as in the first embodiment and thus will not be described.

The generation of the intention prediction model will be described first. Each of the plurality of terminal devices 20 stores, in the storage unit 21, at least one of an action parameter related to radio communication of a user and an environmental parameter related to the radio communication related to the action parameter as a feature quantity and a value indicating whether a user and/or application wants to keep using the current bearer as a correct answer label (teaching data) (step S1). Then, each of the plurality of terminal devices 20 executes model learning using the data in the terminal and uploads the updated model to the server 10 (step S2). The server 10 aggregates the uploaded models to generate a new model. Then, the server 10 distributes the new model to each terminal device 20 (step S3).

Next, the generation of the connection bearer prediction model will be described. Each of the plurality of terminal devices 20 stores, in the storage unit 21, at least one of an action parameter related to radio communication of a user and an environmental parameter related to the radio communication related to the action parameter as a feature quantity and a value indicating which current bearer the user and/or application wants to use as a correct answer label (teaching data) (step S1). Then, each of the plurality of terminal devices 20 executes model learning using the data in the terminal and uploads the updated model to the server 10 (step S2). The server 10 aggregates the uploaded models to generate a new model. Then, the server 10 distributes the new model to each terminal device 20 (step S3).

The server 10 and the terminal device 20 are capable of generating a prediction model without data collection by repeating these processes (steps S1 to S3).

### <3-1-4. Functional Configuration of Communication System>

Next, the functional configuration of the communication system 1 of the second embodiment will be described.

Fig. 13 is a diagram illustrating the functional configuration of the communication system 1 of the second embodiment. More specifically, Fig. 13 is a diagram illustrating a functional configuration required when the server 10 and the terminal device 20 generate a prediction model by federated learning and perform bearer switching processing based on the generated prediction model.

First, the acquisition unit 231 of the terminal device 20 acquires an action parameter related to radio communication of a user and an environmental parameter related to the radio communication related to the action parameter. It should be noted that the information acquired by the acquisition unit 231 may include information related to the application used by the user (for example, information related to the currently used application).

The acquisition unit 231 of the terminal device 20 shapes the acquired parameters into appropriate forms and stores the shaped parameters in the storage unit 21 as data for learning. At this time, the acquisition unit 231 assigns a correct answer label regarding the user's and/or application's connection intention to the data for learning. Alternatively, the acquisition unit 231 assigns a correct answer label regarding a bearer desired by the user and/or application to be connected to the data for learning. In addition, the operation of the acquisition unit 231 may be the same as the operation described in the first embodiment.

It should be noted that in the second embodiment, the communication system 1 may include the preprocessing unit 235 that stores data obtained by performing predetermined processing on the parameters acquired by the acquisition unit 231 in the storage unit 21 as data for learning the learned model. For example, for the purpose of privacy information storage prevention and prediction model accuracy improvement, the communication system 1 may store, in the storage unit 21, data processed by the preprocessing unit 235 using the parameter acquired by the acquisition unit 231 as an input instead of the parameters acquired by the acquisition unit 231 themselves. For example, the preprocessing unit 235 uses machine learning to classify applications currently used by the user based on user usage. Then, the classification result is stored in the storage unit 21.

Next, the learning unit 232 of the terminal device 20 learns the prediction model (quality prediction model, intention prediction model, and connection bearer prediction model) based on the data for learning stored in the storage unit 21. At this time, the learning unit 232 performs the learning at an appropriate timing. For example, the learning unit 232 performs the learning at a timing when the terminal device 20 is not used by the user, the terminal device 20 is in the process of charging, and/or the battery is sufficient.

Next, the communication unit 22 of the terminal device 20 uploads the prediction model generated by learning to the server 10. At this time, the communication unit 22 uploads the prediction model to the server 10 at an appropriate timing. For example, the communication unit 22 uploads the prediction model to the server 10 at a timing when the communication unit 22 is connected to free Wi-Fi, a predetermined daily timing, and/or a regular timing such as month-end.

The server 10 generates one new prediction model by aggregating the prediction models uploaded from the plurality of terminal devices 20. Then, the server 10 distributes the new prediction model to the terminal devices 20. The communication unit 22 of the terminal device 20 stores the new prediction model in the storage unit 21.

The prediction unit 233 of the terminal device 20 acquires the prediction model (quality prediction model, intention prediction model, and connection bearer prediction model) from the storage unit 21. Then, the prediction unit 233 acquires a prediction result by inputting the parameter acquired by the acquisition unit 231 and/or the data processed by the preprocessing unit 235 to the prediction model. More specifically, the prediction unit 233 acquires a prediction result on the future communication quality of the bearer currently used by the user by inputting the action parameter and/or environmental parameter to the quality prediction model. In addition, the prediction unit 233 acquires a prediction result on the user's and/or application's connection intention related to the currently used bearer by inputting the action parameter and/or the environmental parameter to the intention prediction model. In addition, the prediction unit 233 acquires a prediction result a bearer that the user and/or application wants to use by inputting the action parameter and/or the environmental parameter to the connection bearer prediction model. It should be noted that the prediction unit 233 predicts the user's and/or application's connection intention at predetermined time intervals after the communication quality of the currently used bearer satisfies a predetermined condition (for example, after the predicted value of the communication quality falls below a predetermined threshold).

The communication control unit 234 of the terminal device 20 performs bearer switching processing based on the prediction result. For example, the communication control unit 234 switches the currently used bearer (for example, Wi-Fi) to another bearer (for example, cellular network) in a case where the predicted value of the communication quality of the currently used bearer is below a predetermined threshold and the connection intention prediction result is a prediction that the user and/or application wants to switch the bearer.

It should be noted that the communication control unit 234 may switch the current communication to communication using a specific bearer desired by the user and/or application in a case where the user and/or application wants to use the specific bearer without wanting to continue with the connection of the currently connected bearer as a result of the prediction by the connection bearer prediction model. This switching may be performed in a case where the predicted value of the communication quality of the currently used bearer is below a predetermined threshold.

### <3-2. Operation of Communication System>

The operation of the communication system 1 of the second embodiment will be described next. As in the case of the first embodiment, the operation of the communication system 1 of the second embodiment is divided into prediction model learning processing and bearer switching processing using the prediction model.

As described above, the prediction model (quality prediction model, intention prediction model, and connection bearer prediction model) is a learned model generated based on at least one of action parameter and environmental parameter. The prediction model (quality prediction model, intention prediction model, and connection bearer prediction model) may also be a learned model generated based on both action parameter and environmental parameter.

Although the prediction model in the following description is an intention prediction model, the prediction model may also be a quality prediction model or a connection bearer prediction model. In this case, the following teaching data is appropriately replaced with the corresponding data.

### <3-2-1. Learning Processing>

The prediction model learning processing will be described first. The learning processing of the second embodiment will be described with reference to the flowchart of Fig. 9 as in the case of the learning processing of the first embodiment.

First, the terminal device 20 starts connecting to a predetermined bearer (step S101). Then, the terminal device 20 starts acquiring a log related to radio communication (step S102). For example, the terminal device 20 starts acquiring an action parameter related to radio communication of a user and an environmental parameter related to the radio communication related to the action parameter.

Here, (A1) to (A3) described in the first embodiment are assumed as examples of the action parameter. In addition, (B1) to (B7) described in the first embodiment are assumed as examples of the environmental parameter. It should be noted that the terminal device 20 may acquire application-related information as an environmental parameter. At this time, the application-related information may include the following information of (B8) to (B9).

(B8) Communication quality information required by the application currently used by the user
(B9) Switching instruction of the application currently used by the user

It should be noted that the parameter acquired by the terminal device 20 is not limited to the above examples. For example, the parameter acquired by the terminal device 20 may include at least one of (C1) to (C10) described in the first embodiment. It should be noted that the terminal device 20 may acquire application-related information as an action parameter. At this time, the application-related information may include the following information of (C11) to (C21), for example.

(C11) Application name
(C12) Throughput of the communication used by the application
(C13) Communication volume of the communication used by the application (transmission volume and/or reception volume)
(C14) Time of use of the application
(C15) Communication quality information that the application requires in relation to the bearer
(C16) Presence or absence of playback of media included in the application
(C17) Right required by the application
(C18) The number of taps input by the user within a predetermined time in the application
(C19) User's status of use of the application
(C20) Information indicating whether or not the bearer has been switched by the user or the application during the use of the application
(C21) Parameter based on application classification inferred from the information of the above types

Next, the terminal device 20 determines whether the connection to the bearer connected in step S101 has been disconnected (step S103). In the case of non-disconnection (step S103: No), step S103 is repeated until the connection is disconnected. On the other hand, in the case of disconnection (step S203: Yes), it is determined, based on user and/or application behavior-related information, whether or not the user and/or application wants to continue with communication using the current bearer (bearer connected in step S101) (step S104).

(D1) to (D8) described in the first embodiment are assumed as examples of the behavior (behavior in favor of switching) in a case where the user and/or application does not want to continue with communication using the current bearer.

It should be noted that in the second embodiment, in a case where bearer switching has resulted from a switching instruction of the application currently used by the user, it is assumed as a behavior in a case where the user and/or application does not want to continue with communication using the current bearer and is utilized for labeling. The following (D9) to (D14) are assumed as examples of the behavior in a case where the user and/or application does not want to continue with communication using the current bearer.

(D9) Application operation of turning off the connection to current bearer
(D10) Status of the application's communication use in the current month
(D11) Application operation of connecting to another access point
(D12) Application operation of turning off the screen of the terminal device 20
(D13) Application operation of ending the operation
(D14) Application operation of restarting the terminal device 20

In addition, (E1) to (E4) described in the first embodiment are assumed as examples of the behavior (behavior against switching) in a case where the user wants to continue with communication using the current bearer. In addition, the following (E5) to (E6) are assumed as examples of the behavior in a case where the user and/or application wants to continue with communication using the current bearer.

(E5) Application operation of reconnecting the terminal device 20 to the same access point
(E6) Application operation of reconnecting to the current bearer

In a case where it is determined that the user and/or application wants to continue with communication using the current bearer (step S104: Yes), the terminal device 20 labels the acquired log in whole or in part as a sample in a case where the user and/or application wants to continue with the connection (step S105). On the other hand, in a case where it is determined that the user and/or application does not want to continue with communication using the current bearer (step S104: No), the terminal device 20 labels the acquired log in whole or in part as a sample in a case where the user and/or application does not want to continue with the connection (step S106).

The terminal device 20 learns the prediction model based on the acquired parameter (for example, at least one of the action parameter and environmental parameter) (step S107). The terminal device 20 may learn not only the intention prediction model but also the quality prediction model and the connection bearer prediction model. Then, the terminal device 20 uploads the learned prediction model to the server 10 (step S108). After the uploading is completed, the terminal device 20 terminates the learning processing.

The server 10 acquires the prediction models from the plurality of terminal devices 20. Then, a new prediction model is generated by aggregating the uploaded prediction models. Then, the server 10 distributes the new prediction model to each terminal device 20. The terminal device 20 stores the new prediction model in the storage unit 21.

### <3-2-2. Bearer Switching Processing>

Next, the bearer switching processing will be described. The bearer switching processing of the second embodiment will be described with reference to the flowchart of Fig. 10 as in the case of the bearer switching processing of the first embodiment.

First, the terminal device 20 starts connecting to a predetermined bearer (step S201). Then, the terminal device 20 starts acquiring action parameter and environmental parameter (step S202). The action parameter and the environmental parameter are the same as the action parameter and the environmental parameter described in the above

### <3-2-1. Learning Processing>.

Next, the terminal device 20 acquires prediction model (quality prediction model, intention prediction model, and connection bearer prediction model) information from the storage unit 21. Then, the terminal device 20 predicts the future communication quality of the currently connected bearer, predicts the user's and/or application's connection intention related to the bearer, and predicts which bearer the user and/or application wants to use by inputting the parameter (action parameter and/or environmental parameter) acquired in step S202 to the prediction model (step S203).

More specifically, the terminal device 20 acquires a prediction result on the future communication quality of the currently used bearer by inputting the action parameter and/or environmental parameter to the quality prediction model. In addition, the terminal device 20 acquires a prediction result on the user's and/or application's connection intention related to the currently used bearer by inputting the action parameter and/or environmental parameter to the intention prediction model. In addition, the terminal device 20 acquires a prediction result on which bearer the user and/or application wants to use by inputting the action parameter and/or environmental parameter to the connection bearer prediction model.

Next, the terminal device 20 determines, based on the result of step S203, whether or not the communication quality of the currently used bearer deteriorates (step S204). For example, the terminal device 20 determines whether or not the output value of the quality prediction model is below a predetermined threshold. It should be noted that the terminal device 20 may determine whether or not the communication quality of the currently used bearer is deteriorating based on, for example, the current output value of the sensor unit 24 or the communication unit 25 instead of the prediction result of the quality prediction model.

In the case of no communication quality deterioration (step S204: No), the terminal device 20 returns the processing to step S202. In the case of communication quality deterioration (step S204: Yes), the terminal device 20 determines whether or not the user and/or application wants to continue with the connection to the currently used bearer (step S205). At this time, the terminal device 20 may determine whether or not the user and/or application wants to continue with the connection to the currently used bearer based on the prediction result of the intention prediction model.

In addition, the terminal device 20 may determine whether or not the user and/or application wants to continue with the connection to the currently used bearer based on the prediction result of the connection bearer prediction model. For example, the terminal device 20 determines that the user and/or application wants to continue with the connection to the currently used bearer in a case where the bearer predicted by the connection bearer prediction model is the same as the current bearer and determines that the user and/or application does not want to continue with the connection to the currently used bearer in a case where the bearer predicted by the connection bearer prediction model is different from the current bearer.

In a case where the user and/or application wants to continue with the connection (step S205: Yes), the terminal device 20 returns the processing to step S202. In this case, the terminal device 20 continues with the connection to the current bearer. It should be noted that the terminal device 20 may wait for a predetermined time before the return to the processing of step S202.

On the other hand, in a case where the user and/or application does not want to continue with the connection (step S205: No), the terminal device 20 switches the communication using the current bearer to communication using another bearer (step S206). For example, the terminal device 20 switches the communication using the current bearer to communication using the bearer predicted by the connection bearer prediction model. After the switching is completed, the terminal device 20 terminates the bearer switching processing.

### <<4. Modification Examples>>

The above embodiments are examples and various modifications and applications are possible.

### <4-1. Modification Example Related to Application of Prediction Model>

In the first embodiment described above, the terminal device 20 performs prediction related to a user's connection intention and so on using a prediction model that the server 10 generates by federated learning. However, prediction model application is not limited to this example. The following examples are conceivable as to prediction model application.

### (First application example) Installing learned prediction model in terminal

Fig. 14 is a diagram illustrating an example of prediction model application. In the first application example, a prediction model is installed in the terminal device 20. At this time, the prediction model installed in the terminal device 20 may be generated by learning in the terminal device 20. At this time, the terminal device 20 learns a user's preference related to the bearer to be used and executes bearer switching based on the output value (predicted value) of the prediction model. As a matter of course, the prediction model installed in the terminal device 20 may be generated by the server 10 performing federated learning.

### (Second application example) Installing learned model in another terminal

Fig. 15 is a diagram illustrating another example of prediction model application. In the second application example, a prediction model generated by the terminal device 20 is diverted to another communication device used by a user. The other communication device is, for example, a moving body or a wearable device. At this time, the terminal device 20 learns the user's preference related to the bearer to be used. Then, the terminal device 20 transmits the prediction model generated by learning to the other communication device. The other communication device executes bearer switching based on the output value (predicted value) of the prediction model. As a result, bearer switching based on user intention prediction is possible even if another terminal device is a terminal with which it is difficult to grasp the user's intention.

### (Third application example) Inferring at another location with parameter reported from terminal

Fig. 16 is a diagram illustrating another example of prediction model application. In the third application example, the terminal device 20 reports a parameter to another communication device on a network. The other communication device generates a prediction model based on the parameter from the terminal device 20. Then, the other communication device determines whether or not the terminal device 20 should perform bearer switching based on the output value (predicted value) of the prediction model and the surrounding environment. The other communication device instructs the terminal device 20 to perform bearer switching based on the determination result. The terminal device 20 performs bearer switching based on the instruction from the other communication device. As a result, advanced network control that cannot be completed with only one terminal device 20 becomes possible.

The modification example described in this <4-1> can also be applied to the second embodiment. For example, the prediction model may be one that has learned the preference of an application used by a user related to a specification bearer. For example, the prediction model may be one that has learned the application's connection intention or one that has learned a radio communication scheme desired by the application.

### <4-2. Labeling-related Modification Example>

Although sample labeling has been described with a specific example in the above the first embodiment (step S106 of learning processing), examples of the labeling are not limited to this example.

For example, the terminal device 20 may label a sample at the time of the user turning off radio communication using the current bearer as a sample in the case of the user not wanting to continue with communication using the current bearer.

In addition, the terminal device 20 may label a sample at the time of the user switching from the communication to a predetermined access point using the current bearer to communication to another access point as a sample at the time of the user not wanting to continue with communication using the current bearer.

The modification example described in this <4-2> can also be applied to the second embodiment. For example, the terminal device 20 may label a sample at the time of the application used by the user turning off radio communication using the current bearer as a sample in the case of the application not wanting to continue with communication using the current bearer.

In addition, the terminal device 20 may label a sample at the time of the application used by the user switching from the communication to a predetermined access point using the current bearer to communication to another access point as a sample at the time of the application not wanting to continue with communication using the current bearer.

### <4-3. Other Modification Examples>

In the second embodiment, the intention prediction model is a learned model for predicting the user's and/or application's bearer-related connection intention. In addition, in the second embodiment, the connection bearer prediction model is a learned model for predicting a bearer that the user and/or application wants to use. Both the prediction of the application's bearer-related connection intention and the prediction of a bearer that the application wants to use can be regarded as indirect user intention prediction. Therefore, the prediction model illustrated in the second embodiment can also be regarded as a prediction model predicting a radio communication scheme desired by the user.

A control device that controls the server 10 and the terminal device 20 of the present embodiment may be realized by a dedicated computer system or a general-purpose computer system.

For example, a communication program for executing the above operation is distributed after storage in a computer-readable recording medium such as optical disk, semiconductor memory, magnetic tape, and flexible disk. Then, the control device is configured by, for example, installing the program in a computer and executing the above processing. At this time, the control device may be a device external to the server 10 and the terminal device 20 (for example, a personal computer). In addition, the control device may be a device inside the server 10 or the terminal device 20 (for example, the control unit 13 or the control unit 23).

In addition, the communication program may be stored in a disk device provided in a server on a network such as the Internet so as to be, for example, downloadable to a computer. In addition, the functions described above may be realized by cooperation between an operating system (OS) and application software. In this case, a non-OS part may be stored in a medium and distributed or may be stored in a server so as to be, for example, downloadable to a computer.

In addition, among the processes described in the above embodiments, the processing described as being automatically performed can be manually performed in whole or in part or the processing described as being manually performed can be, by a known method, automatically performed in whole or in part. In addition, the information including the processing procedures, specific names, and various data and parameters in the above document and drawings can be changed in any manner unless otherwise specified. For example, the various types of information illustrated in the drawings are not limited to the illustrated information.

In addition, each component of each illustrated device is functionally conceptual and does not necessarily need to be physically configured as illustrated. In other words, the specific form of distribution and integration of each device is not limited to the illustrated one, and the whole or a part thereof can be functionally or physically distributed and integrated in any unit in accordance with various loads and statuses of use. It should be noted that this distribution- and integration-based configuration may be performed dynamically.

In addition, the above embodiments can be appropriately combined in areas where the processing content is not contradictory. In addition, the order of the steps in the flowcharts of the above embodiments can be changed as appropriate.

In addition, for example, the present embodiment can be implemented as any configuration that configures a device or system, examples of which include a processor as a system large scale integration (LSI) or the like, a module using a plurality of processors or the like, a unit using a plurality of modules or the like, a set or the like with another function added to a unit (that is, a partial device configuration)

It should be noted that the system in the present embodiment means a set of a plurality of components (devices, modules (parts), and the like) and it does not matter whether every component is in the same housing. Therefore, both a plurality of network-connected devices stored in separate housings and a single device storing a plurality of modules in one housing are systems.

In addition, for example, the present embodiment is capable of taking a cloud computing configuration in which one function is shared and jointly processed by a plurality of devices via a network.

### <<5. Conclusion>>

As described above, according to an embodiment of the present disclosure, in a case where the quality of radio communication using a predetermined bearer (first radio communication scheme) satisfies a predetermined condition, the terminal device 20 predicts whether or not a user wants to continue with communication using the predetermined bearer using a prediction model of the user's radio communication-related action. At this time, the prediction model is a learned model generated based on at least one of an action parameter related to the radio communication of the user and an environmental parameter related to the radio communication related to the action parameter. The terminal device 20 predicts whether or not the user wants to keep using the radio communication using the predetermined bearer at predetermined time intervals after the quality of the radio communication using the predetermined bearer satisfies the predetermined condition. Based on the prediction result, the terminal device 20 switches the radio communication using the predetermined bearer (first radio communication scheme) to radio communication using another bearer (second radio communication scheme).

As a result, the terminal device 20 is capable of reducing switching unintended by the user. As a result, the highly convenient terminal device 20 can be realized.

Although the embodiments of the present disclosure have been described above, the technical scope of the present disclosure is not limited to the embodiments described above, and various modifications can be made without departing from the gist of the present disclosure. In addition, components in different embodiments and modification examples may be combined as appropriate.

In addition, the effects of each embodiment described in the present specification are merely examples and are not limited, and there may be other effects.

### [Reference Signs List]

1 communication system
10 server
20 terminal device
11, 21 storage unit
12, 22, 25 communication unit
13, 23 control unit
24 sensor unit
131, 231 acquisition unit
132 generation unit
232 learning unit
233 prediction unit
234 communication control unit
235 preprocessing unit
N1, N2 network

## Claims

1. A communication device (20) comprising:
circuitry (23) configured to
use a first radio communication scheme (252) for a radio communication; and
in a case where a quality of the radio communication using the first radio communication scheme (252) satisfies a condition, use a prediction model (233) of an application' s action related to the radio communication to predict a second radio communication scheme (251) desired by the application,
wherein the prediction model (233) is a learned model generated based on at least one of an action parameter related to the radio communication of the application and an environmental parameter related to the radio communication, and
wherein the second radio communication scheme (251) desired by the application is predicted at a time interval after the quality of the radio communication using the first radio communication scheme satisfies the condition.

2. The communication device according to claim 1, wherein the application is a user.

3. The communication device according to claim 1, wherein
the application is software executing on the communication device and used by a user.

4. The communication device according to claim 1, wherein
the prediction model generated based on both the action parameter and the environmental parameter.

5. The communication device according to claim 1, wherein
the prediction model is generated by aggregating, by federated learning, a plurality of models generated based on at least one of the action parameter and the environmental parameter.

6. The communication device according to claim 4, wherein
the environmental parameter comprises at least one of:
a received signal strength indicator (RSSI);
a parameter indicating the number of packets staying in the communication device;
a parameter indicating a theoretical communication speed value and a frequency band that is used;
a parameter related to battery consumption of the communication device;
a parameter related to an importance of current traffic; and
a parameter related to information related to a current location of the communication device.

7. The communication device according to claim 1, wherein the circuitry is further configured to:
switch the radio communication from the first radio communication scheme to the second radio communication scheme based on a result of the prediction.

8. The communication device according to claim 1, wherein the circuitry is further configured to:
acquire at least one of the action parameter and the environmental parameter; and
store data obtained by performing processing on the parameter in a storage unit as data for training for the learned model.

9. The communication device according to claim 4, wherein
the action parameter comprises at least one of:
a parameter indicating a walking state of the user,
a parameter indicating an acceleration applied to the communication device, and
a parameter indicating whether or not reconnection is implemented within a most recent predetermined time.

10. The communication device according to claim 4, wherein
the action parameter comprises a parameter indicating the user's monthly cumulative data usage.

11. The communication device according to claim 4, wherein
the action parameter comprises at least one of:
a name of the application;
a throughput of communication used by the application;
a communication volume of the communication used by the application;
time of use of the application;
communication quality information that the application requires in relation to the first radio communication scheme;
presence or absence of playback of media comprised in the application;
a right required by the application;
the number of taps input by the user within a predetermined time in the application;
a status of use of the application that is used by the user;
information indicating whether the first radio communication scheme has been switched by the user or the application while the application is used; and
a parameter based on classification of the application.

12. The communication device according to claim 4, wherein
the environmental parameter comprises a parameter indicating a communication speed of the radio communication.

13. An information processing device (20) comprising:
circuitry configured to
acquire at least one of an action parameter related to a radio communication using a first radio communication scheme (252) of an application and an environmental parameter related to the radio communication; and
in a case where a quality of the radio communication using the first radio communication scheme satisfies a condition, train a prediction model (233) predicting a second radio communication scheme desired by the application,
wherein the circuitry trains the prediction model based on at least one of the action parameter related to the radio communication of the application and the environmental parameter related to the radio communication.

14. The information processing device according to claim 13, wherein the circuitry is further configured to:
train the prediction model based on both the action parameter related to the radio communication of the application and the environmental parameter related to the radio communication.

15. A communication method comprising:
using a first radio communication scheme for a radio communication; and
in a case where a quality of the radio communication using the first radio communication scheme satisfies a condition, using a prediction model of an application' s action related to the radio communication to predict a second radio communication scheme desired by the application,
wherein the prediction model is a learned model generated based on at least one of an action parameter related to the radio communication of the application and an environmental parameter related to the radio communication, and
wherein the second radio communication scheme desired by the application is predicted at a time interval after the quality of the radio communication using the first radio communication scheme satisfies the condition.

## Patentansprüche

1. Kommunikationsvorrichtung (20), umfassend:
eine Schaltungungsanlage (23), die konfiguriert ist zum
Verwenden eines ersten Funkkommunikationsschemas (252) für eine Funkkommunikation; und
in einem Fall, in dem eine Qualität der Funkkommunikation unter Verwendung des ersten Funkkommunikationsschemas (252) eine Bedingung erfüllt, Verwenden eines Vorhersagemodells (233) einer Aktion einer Anwendung in Bezug auf die Funkkommunikation, um ein zweites Funkkommunikationsschema (251) vorherzusagen, das von der Anwendung gewünscht wird,
wobei das Vorhersagemodell (233) ein gelerntes Modell ist, das basierend auf mindestens einem von einem Aktionsparameter, der sich auf die Funkkommunikation der Anwendung bezieht, und einem Umgebungsparameter, der sich auf die Funkkommunikation bezieht, generiert wird, und
wobei das zweite Funkkommunikationsschema (251), das von der Anwendung gewünscht ist, in einem Zeitintervall vorhergesagt wird, nachdem die Qualität der Funkkommunikation unter Verwendung des ersten Funkkommunikationsschemas die Bedingung erfüllt.

2. Kommunikationsvorrichtung nach Anspruch 1, wobei die Anwendung ein Benutzer ist.

3. Kommunikationsvorrichtung nach Anspruch 1, wobei
die Anwendung eine Software ist, die auf der Kommunikationsvorrichtung ausgeführt wird und von einem Benutzer verwendet wird.

4. Kommunikationsvorrichtung nach Anspruch 1, wobei
das Vorhersagemodell sowohl basierend auf dem Aktionsparameter als auch dem Umgebungsparameter generiert wird.

5. Kommunikationsvorrichtung nach Anspruch 1, wobei
das Vorhersagemodell durch Aggregieren, durch verbundenes Lernen, einer Vielzahl von Modellen generiert wird, die basierend auf mindestens einem des Aktionsparameters und des Umgebungsparameters generiert werden.

6. Kommunikationsvorrichtung nach Anspruch 4, wobei
der Umgebungsparameter mindestens eines umfasst von:
einem Empfangssignalstärkenindikator (RSSI);
einem Parameter, der die Anzahl der Pakete angibt, die in der Kommunikationsvorrichtung verbleiben;
einem Parameter, der einen theoretischen Kommunikationsgeschwindigkeitswert und Frequenzband, das verwendet wird, angibt;
einem Parameter, der sich auf den Batterieverbrauch der Kommunikationsvorrichtung bezieht;
einem Parameter, der sich auf eine Wichtigkeit von aktuellem Verkehr bezieht; und
einem Parameter, der sich auf Informationen bezieht, die sich auf einen aktuellen Standort der Kommunikationsvorrichtung beziehen.

7. Kommunikatorvorrichtung nach Anspruch 1, wobei die Schaltungungsanlage ferner konfiguriert ist zum:
Umschalten der Funkkommunikation von dem ersten Funkkommunikationsschema zu dem zweiten Funkkommunikationsschema basierend auf einem Ergebnis der Vorhersage.

8. Kommunikatorvorrichtung nach Anspruch 1, wobei die Schaltungungsanlage ferner konfiguriert ist zum:
Erfassen von mindestens einem von dem Aktionsparameter und dem Umgebungsparameter; und
Speichern von Daten, die durch Durchführen eines Verarbeitens an dem Parameter in einer Speicherungseinheit als Daten zum Trainieren für das gelernte Modell erhalten werden.

9. Kommunikationsvorrichtung nach Anspruch 4, wobei
der Aktionsparameter mindestens eines umfasst von:
einem Parameter, der einen Zustand des Laufens des Benutzers angibt,
einem Parameter, der eine Beschleunigung angibt, die auf die Kommunikationsvorrichtung angewendet wird, und
einem Parameter, der angibt, ob eine Wiederverbindung innerhalb einer jüngsten vorbestimmten Zeit implementiert ist oder nicht.

10. Kommunikationsvorrichtung nach Anspruch 4, wobei
der Aktionsparameter einen Parameter umfasst, der die monatliche kumulative Datennutzung des Benutzers angibt.

11. Kommunikationsvorrichtung nach Anspruch 4, wobei
der Aktionsparameter mindestens eines umfasst von:
einem Name der Anwendung;
einem Durchsatz von Kommunikation, der von der Anwendung verwendet wird;
einem Kommunikationsvolumen der Kommunikation, die von der Anwendung verwendet wird;
einer Zeit der Verwendung der Anwendung;
Kommunikationsqualitätsinformationen, die die Anwendung in Bezug auf das erste Funkkommunikationsschema benötigt;
einem Vorhandensein oder Abwesenheit einer Wiedergabe von Medien, die in der Anwendung enthalten sind;
einem Recht, das durch die Anwendung erfordert wird;
der Anzahl von Tippeingaben durch den Benutzer innerhalb einer vorbestimmten Zeit in der Anwendung;
einem Verwendungsstatus der Anwendung, die von dem Benutzer verwendet wird;
Informationen, die angeben, ob das erste Funkkommunikationsschema durch den Benutzer oder die Anwendung umgeschaltet wurde, während die Anwendung verwendet wird; und
einem Parameter basierend auf einer Klassifizierung der Anwendung.

12. Kommunikationsvorrichtung nach Anspruch 4, wobei
der Umgebungsparameter einen Parameter, der eine Kommunikationsgeschwindigkeit der Funkkommunikation angibt, umfasst.

13. Informationsverarbeitungsvorrichtung (20), umfassend:
eine Schaltungungsanlage, die konfiguriert ist zum
Erfassen von mindestens einem von einem Aktionsparameter, der sich auf eine Funkkommunikation bezieht, unter Verwendung eines ersten Funkkommunikationsschemas (252) einer Anwendung und eines Umgebungsparameters, der sich auf die Funkkommunikation bezieht; und
in einem Fall, in dem eine Qualität der Funkkommunikation unter Verwendung des ersten Funkkommunikationsschemas eine Bedingung erfüllt, Trainieren eines Vorhersagemodells (233), das ein zweites Funkkommunikationsschema vorhersagt, das von der Anwendung gewünscht wird,
wobei die Schaltungungsanlage das Vorhersagemodell basierend auf mindestens einem von dem Aktionsparameter, der sich auf die Funkkommunikation der Anwendung bezieht, und dem Umgebungsparameter, der sich auf die Funkkommunikation bezieht, trainiert.

14. Informationsverarbeitungsvorrichtung nach Anspruch 13, wobei die Schaltungungsanlage ferner konfiguriert ist zum:
Trainieren des Vorhersagemodells, das sowohl auf dem Aktionsparameter, der sich auf die Funkkommunikation der Anwendung bezieht, als auch auf dem Umgebungsparameter, der sich auf die Funkkommunikation bezieht, basiert.

15. Kommunikationsverfahren, umfassend:
Verwenden eines ersten Funkkommunikationsschemas für eine Funkkommunikation; und
in einem Fall, in dem eine Qualität der Funkkommunikation unter Verwendung des ersten Funkkommunikationsschemas eine Bedingung erfüllt, Verwenden eines Vorhersagemodells einer Aktion einer Anwendung in Bezug auf die Funkkommunikation, um ein zweites Funkkommunikationsschema vorherzusagen, das von der Anwendung gewünscht wird,
wobei das Vorhersagemodell ein gelerntes Modell ist, das basierend auf mindestens einem von einem Aktionsparameter, der sich auf die Funkkommunikation der Anwendung bezieht, und einem Umgebungsparameter, der sich auf die Funkkommunikation bezieht, generiert wird, und
wobei das zweite Funkkommunikationsschema, das von der Anwendung gewünscht ist, in einem Zeitintervall vorhergesagt wird, nachdem die Qualität der Funkkommunikation unter Verwendung des ersten Funkkommunikationsschemas die Bedingung erfüllt.

## Revendications

1. Dispositif de communication (20) comprenant :
un ensemble de circuits (23) configuré pour
utiliser un premier schéma de communication radio (252) pour une communication radio ; et
dans un cas où une qualité de la communication radio à l'aide du premier schéma de communication radio (252) satisfait à une condition, utiliser un modèle de prédiction (233) d'une action d'une application liée à la communication radio afin de prédire un second schéma de communication radio (251) souhaité par l'application,
dans lequel le modèle de prédiction (233) est un modèle appris généré sur la base d'au moins l'un parmi un paramètre d'action lié à la communication radio de l'application et un paramètre environnemental lié à la communication radio, et
dans lequel le second schéma de communication radio (251) souhaité par l'application est prédit à un intervalle de temps après que la qualité de la communication radio à l'aide du premier schéma de communication radio satisfait à la condition.

2. Dispositif de communication selon la revendication 1, dans lequel l'application est un utilisateur.

3. Dispositif de communication selon la revendication 1, dans lequel
l'application est un logiciel s'exécutant sur le dispositif de communication et utilisé par un utilisateur.

4. Dispositif de communication selon la revendication 1, dans lequel
le modèle de prédiction généré sur la base à la fois du paramètre d'action et du paramètre environnemental.

5. Dispositif de communication selon la revendication 1, dans lequel
le modèle de prédiction est généré par agrégation, par apprentissage fédéré, d'une pluralité de modèles générés sur la base d'au moins l'un parmi le paramètre d'action et le paramètre environnemental.

6. Dispositif de communication selon la revendication 4, dans lequel
le paramètre environnemental comprend au moins l'un parmi :
un indicateur de puissance de signal reçu (RSSI) ;
un paramètre indiquant le nombre de paquets restant dans le dispositif de communication ;
un paramètre indiquant une valeur théorique de vitesse de communication et une bande de fréquence qui est utilisée ;
un paramètre lié à la consommation de batterie du dispositif de communication ;
un paramètre lié à une importance de trafic actuel ; et
un paramètre lié à des informations relatives à un emplacement actuel du dispositif de communication.

7. Dispositif de communication selon la revendication 1, dans lequel l'ensemble de circuits est en outre configuré pour :
commuter la communication radio du premier schéma de communication radio au second schéma de communication radio sur la base d'un résultat de la prédiction.

8. Dispositif de communication selon la revendication 1, dans lequel l'ensemble de circuits est en outre configuré pour :
acquérir au moins l'un parmi le paramètre d'action et le paramètre environnemental ; et
stocker des données obtenues en effectuant un traitement sur le paramètre dans une unité de stockage en tant que données pour l'entraînement pour le modèle appris.

9. Dispositif de communication selon la revendication 4, dans lequel
le paramètre d'action comprend au moins l'un parmi :
un paramètre indiquant un état de marche de l'utilisateur,
un paramètre indiquant une accélération appliquée au dispositif de communication, et
un paramètre indiquant si la reconnexion est mise en œuvre ou non dans un temps prédéterminé le plus récent.

10. Dispositif de communication selon la revendication 4, dans lequel
le paramètre d'action comprend un paramètre indiquant l'utilisation mensuelle cumulée de données de l'utilisateur.

11. Dispositif de communication selon la revendication 4, dans lequel
le paramètre d'action comprend au moins l'un parmi :
un nom de l'application ;
un débit de communication utilisé par l'application ;
un volume de communication de la communication utilisée par l'application ;
un temps d'utilisation de l'application ;
des informations de qualité de communication que l'application exige par rapport au premier schéma de communication radio ;
une présence ou une absence de lecture des médias compris dans l'application ;
un droit exigé par l'application ;
le nombre de tapotements entrés par l'utilisateur au cours d'un temps prédéterminé dans l'application ;
un état d'utilisation de l'application qui est utilisée par l'utilisateur ;
des informations indiquant si le premier schéma de communication radio a été commuté par l'utilisateur ou l'application pendant que l'application est utilisée ; et
un paramètre basé sur la classification de l'application.

12. Dispositif de communication selon la revendication 4, dans lequel
le paramètre environnemental comprend un paramètre indiquant une vitesse de communication de la communication radio.

13. Dispositif de traitement d'informations (20) comprenant :
un ensemble de circuits configuré pour
acquérir au moins l'un parmi un paramètre d'action lié à une communication radio à l'aide d'un premier schéma de communication radio (252) d'une application et un paramètre environnemental lié à la communication radio ; et
dans un cas où une qualité de la communication radio à l'aide du premier schéma de communication radio satisfait à une condition, entraîner un modèle de prédiction prédisant un second schéma de communication radio souhaité par l'application,
dans lequel l'ensemble de circuits entraîne le modèle de prédiction sur la base d'au moins l'un parmi le paramètre d'action lié à la communication radio de l'application et le paramètre environnemental lié à la communication radio.

14. Dispositif de traitement d'informations selon la revendication 13, dans lequel l'ensemble de circuits est en outre configuré pour :
entraîner le modèle de prédiction sur la base à la fois du paramètre d'action lié à la communication radio de l'application et du paramètre environnemental lié à la communication radio.

15. Procédé de communication comprenant :
l'utilisation d'un premier schéma de communication radio pour une communication radio ; et
dans un cas où une qualité de la communication radio à l'aide du premier schéma de communication radio satisfait à une condition, l'utilisation d'un modèle de prédiction d'une action d'une application liée à la communication radio afin de prédire un second schéma de communication radio souhaité par l'application,
dans lequel le modèle de prédiction est un modèle appris généré sur la base d'au moins l'un parmi un paramètre d'action lié à la communication radio de l'application et un paramètre environnemental lié à la communication radio, et
dans lequel le second schéma de communication radio souhaité par l'application est prédit à un intervalle de temps après que la qualité de la communication radio à l'aide du premier schéma de communication radio satisfait à la condition.
